# EUROPEAN PATENT APPLICATION

(11) **EP 4 672 832 A1**
(43) Date of publication of application: **31.12.2025**
(21) Application number: 24778030.7
(22) Date of filing: 26.03.2024
(51) Int. Cl.: H04W 56/00, H04W 28/02

(54) **COMMUNICATION METHOD, DEVICE, CHIP, STORAGE MEDIUM, AND PROGRAM PRODUCT**

(30) Priority: 27.03.2023 CN 202310335675
(71) Applicant: Huawei Technologies Co., Ltd., Shenzhen, Guangdong 518129 (CN)
(72) Inventor: PAN, Qi, Shenzhen, Guangdong 518129 (CN); NI, Hui, Shenzhen, Guangdong 518129 (CN)
(74) Representative: Gill Jennings & Every LLP
(86) International application number: PCT/CN2024/083912
(87) International publication number: WO 2024/199242

(57) **Abstract**

This application relates to a communication method, a device, a chip, a storage medium, and a program product. The communication method includes: A first network device receives configuration information, where the configuration information is used to enable the first network device to report time information used for synchronous transmission of a first data flow of a service and a second data flow of the service (S710); determines first transmission time from sending of the first service flow by an application server to arrival of the first service flow at the first network device (S720); and reports, based on the first transmission time, the time information used for synchronous transmission of the first data flow and the second data flow (S730). In this manner, a solution for synchronization of a plurality of data flows is proposed. In this solution, synchronous transmission scheduling is performed on the data flows based on time information related to transmission time of a service flow from the application server to the first network device, to ensure accuracy of end-to-end synchronous transmission of the data flows, and ensure user service experience.

## Description

### CROSS-REFERENCE TO RELATED APPLICATIONS

This application claims priority to Chinese Patent Application No. 202310335675.0, filed on March 27, 2023 and entitled "COMMUNICATION METHOD, DEVICE, CHIP, STORAGE MEDIUM, AND PROGRAM PRODUCT", which is incorporated herein by reference in its entirety.

### TECHNICAL FIELD

The present disclosure relates to the communication field, and more specifically, to a communication method, a device, a chip, a computer-readable storage medium, and a computer program product.

### BACKGROUND

For real-time media services, for example, currently emerging virtual reality (Virtual Reality, VR)/augmented reality (Augmented Reality, AR)/mixed reality (Mixed Reality, MR) services, cloud gaming services, and tactile multi-modal services, an end-to-end delay has an extremely strict requirement, and there are usually a plurality of different forms of data flows in a media transmission process. For example, common media services are usually classified into audio streams and video streams; and for tactile services, in addition to audio streams and video streams, there are also related data flows in different dimensions such as pressure data flows and touch data flows.

To ensure user experience, synchronous transmission of a plurality of data flows needs to be ensured. Therefore, for a 5th generation (5th Generation, 5G) system (5G System, 5GS), how to ensure synchronous transmission of a plurality of data flows needs to be further studied.

### SUMMARY

Example embodiments of the present disclosure provide a solution for synchronous transmission of a plurality of data flows, and relate to a communication method, a device, a chip, a computer-readable storage medium, and a computer program product.

According to a first aspect, an embodiment of the present disclosure provides a communication method. The method includes: A first network device receives configuration information, where the configuration information is used to enable (for example, indicate) the first network device to report time information used for synchronous transmission of a first data flow of a service and a second data flow of the service; determines first transmission time from sending of the first data flow by an application server to arrival of the first data flow at the first network device, namely, first transmission time from sending of a data packet of the first data flow by the application server to arrival of the data packet of the first data flow at the first network device; and reports, based on the first transmission time, the time information used for synchronous transmission of the first data flow and the second data flow.

In this manner, a solution for synchronization of a plurality of data flows is proposed. In this solution, transmission scheduling is performed on data flows based on time information related to transmission time of the data flows from the application server to the first network device, so that accuracy of end-to-end synchronous transmission of the data flows can be ensured, and user service experience can be ensured. It should be noted that the first data flow and the second data flow may be different data flows of a same user or may be different data flows of different users, and may be sent by a same application server or may be sent by different application servers.

In some embodiments, determining the first transmission time includes: determining first arrival time at which the data packet of the first data flow arrives at the first network device and a first timestamp in the data packet; and determining the first transmission time based on the first arrival time and the first timestamp. The timestamp in the data packet identifies collection and generation time of a current media unit (for example, a media frame, a slice, an audio frame, and tactile information), that is, may be understood as time at which the data packet is generated, and may approximately identify time at which the data packet is sent. Therefore, the first transmission time from sending of the first data flow by the application server to arrival of the first data flow at the first network device may be determined based on the first arrival time at which the data packet of the first data flow arrives at the first network device and the first timestamp in the data packet of the first data flow, for transmission scheduling of the first data flow and the second data flow, to implement a flexible data flow transmission scheduling manner.

In some embodiments, reporting the time information includes: sending the first transmission time to a second network device, where specifically, the first transmission time may be sent by a session management function device to the second network device; or sending the first transmission time to a third network device. In this manner, the second network device or the third network device can perform data flow transmission scheduling by using the first transmission time.

In some embodiments, the method further includes: determining second arrival time at which a data packet of the second data flow arrives at the first network device and a second timestamp in the data packet; and determining, based on the second arrival time and the second timestamp, second transmission time from sending of the second data flow by the application server or another application server to arrival of the second data flow at the first network device. In this manner, the transmission time of the second data flow that needs to be synchronously transmitted may be obtained, to implement transmission scheduling of the first data flow and the second data flow.

In some embodiments, reporting the time information further includes: sending the second transmission time to the second network device, where specifically, the second transmission time is sent by the session management function device to the second network device; or sending the second transmission time to the third network device. In this manner, the second transmission time may be sent to the second network device or the third network device, so that the second network device or the third network device performs data flow transmission scheduling.

In some embodiments, the configuration information includes an association identifier indicating that the first data flow is associated with the second data flow. In this manner, the association identifier may also indicate that the first data flow and the second data flow need to be synchronously transmitted, so that the first network device can compute a difference between transmission time of the first data flow and transmission time of the second data flow.

In some embodiments, the method further includes: determining a transmission time difference between the first transmission time and the second transmission time based on the association identifier. In this manner, transmission scheduling can be performed based on a transmission time difference between transmission time at which the data flow is sent by the application server and transmission time at which the data flow arrives at the first network device.

In some embodiments, reporting the time information includes: sending the transmission time difference to the second network device, where specifically, the transmission time difference is sent by the session management function device to the second network device; or sending the transmission time difference to the third network device. In some embodiments, the configuration information further includes an identifier of a reference data flow, that is, the transmission time difference is a difference between time of another data flow and time of the reference data flow. For example, if the identifier of the reference data flow indicates the first data flow, the transmission time difference is a difference between time of another data flow and time of the first data flow. In some embodiments, the time information further includes the identifier of the reference data flow, that is, the reported time information includes the transmission time difference and the identifier of the reference data flow. In this manner, the second network device or the third network device can perform data flow transmission scheduling based on the difference between the transmission time of the first data flow and the transmission time of the second data flow.

In some embodiments, the configuration information further includes information about a clock difference between the first data flow and the second data flow, and the transmission time difference is further determined based on the information about the clock difference. In this manner, accuracy of the transmission time difference can be further improved, thereby improving accuracy of end-to-end synchronous transmission of the data flows, and ensuring user service experience.

In some embodiments, the configuration information further includes a trigger condition, and the trigger condition indicates a threshold for triggering the first network device to send the transmission time difference, or indicates the first network device to periodically send the transmission time difference (that is, indicates a sending periodicity for the first network device to send the transmission time difference). In this manner, reporting triggered based on the time information can be implemented, so that signaling overheads are controlled within an appropriate range.

In some embodiments, sending the first transmission time to the third network device includes: adding the first transmission time to the data packet (for example, one or more data packets) of the first data flow. Sending the second transmission time to the third network device includes: adding the second transmission time to the data packet (for example, one or more data packets) of the second data flow. In this manner, the transmission time of the data flow can be carried in the data packet of the data flow and sent to the third network device, so that a flexible time information reporting manner is implemented.

In some embodiments, sending the transmission time difference to the third network device includes: adding the transmission time difference to a data packet (for example, one or more data packets) of at least one of the first data flow and the second data flow. In some embodiments, the identifier of the reference data flow is further added to the data packet (for example, the one or more data packets) of at least one of the first data flow and the second data flow. In this manner, the transmission time difference between data flows can be carried in data packets of the data flows and sent to the third network device, so that a flexible time information reporting manner is implemented.

According to a second aspect, an embodiment of the present disclosure provides a communication method. The method includes: A second network device receives time information used for synchronous transmission of a first data flow of a service and a second data flow of the service; and performs transmission scheduling on at least one of the first data flow and the second data flow based on the time information.

In this manner, a solution for synchronization of a plurality of data flows is proposed. In this solution, the second network device performs transmission scheduling on the data flows based on time information related to transmission time of the data flows from an application server to a first network device, so that accuracy of end-to-end synchronous transmission of the data flows can be ensured, and user service experience can be ensured. It should be noted that the first data flow and the second data flow may be different data flows of a same user or may be different data flows of different users, and may be sent by a same application server or may be sent by different application servers.

In some embodiments, the second network device receives data flow synchronization information from an application function device, where the data flow synchronization information includes at least one of the following: description information of the first data flow and the second data flow; an association identifier, indicating that the first data flow is associated with the second data flow; or a synchronization indication, indicating to perform transmission scheduling on the first data flow and the second data flow. In this manner, information indicating data flow synchronization may be obtained, to perform transmission scheduling on the data flow indicated by the data flow synchronization information.

In some embodiments, the method further includes: generating, based on the data flow synchronization information, a data flow policy indicating to monitor and report the time information. In this manner, the first network device may be indicated to monitor and report the time information used for data flow synchronous transmission, to implement a solution in which transmission scheduling is performed on the plurality of data flows based on the time information related to the transmission time of the data flows from the application server to the first network device.

In some embodiments, the time information includes: first transmission time from sending of the first data flow by the application server to arrival of the first data flow at the first network device; and/or second transmission time from sending of the second data flow by the application server or another application server to arrival of the second data flow at the first network device or another first network device. In this manner, the transmission time of the first data flow and the transmission time of the second data flow from the application server to the first network device may be obtained, thereby implementing transmission scheduling of the first data flow and the second data flow.

In some embodiments, the method further includes: determining a transmission time difference between the first transmission time and the second transmission time. In this manner, transmission scheduling can be performed based on a transmission time difference between transmission time at which a plurality of data flows are sent by the application server and transmission time at which the plurality of data flows arrive at the first network device.

In some embodiments, the data flow synchronization information further includes information about a clock difference between the first data flow and the second data flow, and the transmission time difference is further determined based on the information about the clock difference. In this manner, accuracy of the transmission time difference can be further improved, thereby improving accuracy of end-to-end synchronous transmission of the data flows, and ensuring user service experience.

In some embodiments, the data flow monitoring policy includes information about a clock difference between the first data flow and the second data flow.

In some embodiments, the time information includes: a transmission time difference between first transmission time of the first data flow and second transmission time of the second data flow. In some embodiments, the time information further includes an identifier of a reference data flow, that is, the reported time information includes the transmission time difference and the identifier of the reference data flow. In this manner, transmission scheduling can be performed based on the transmission time difference reported by the first network device, to ensure user service experience.

In some embodiments, the data flow monitoring policy includes a trigger condition, and the trigger condition indicates a threshold for reporting the transmission time difference, or to periodically report the transmission time difference. In this manner, reporting triggered based on the time information can be implemented, so that signaling overheads are controlled within an appropriate range.

In some embodiments, performing transmission scheduling includes: configuring a packet delay budget of at least one of the first data flow and the second data flow based on the time information. In this manner, data flow transmission scheduling is performed by adjusting packet delay budgets of the data flows, to ensure accuracy of end-to-end synchronous transmission of the data flows, and ensure user service experience.

In some embodiments, the method further includes: generating a plurality of quality of service configurations with different packet delay budgets based on the data flow synchronization information. In this manner, a third network device can select, based on the time information of the data flows, the quality of service configurations with different packet delay budgets, to implement data flow transmission scheduling.

According to a third aspect, an embodiment of the present disclosure provides a communication method. The method includes: A third network device obtains, from a data packet

(for example, one or more data packets) of at least one of a first data flow of a service and a second data flow of the service, time information used for synchronous transmission of the first data flow and the second data flow; and the third network device performs transmission scheduling on at least one of the first data flow and the second data flow based on the time information.

In this manner, a solution for synchronization of a plurality of data flows is proposed. In this solution, the third network device performs transmission scheduling on the data flows based on time information related to transmission time of the data flows from an application server to a first network device, so that accuracy of end-to-end synchronous transmission of the data flows can be ensured, and user service experience can be ensured. It should be noted that the first data flow and the second data flow may be different data flows of a same user or may be different data flows of different users, and may be sent by a same application server or may be sent by different application servers.

In some embodiments, the method further includes: receiving configuration information indicating the third network device to perform transmission scheduling. In this manner, transmission scheduling can be performed, based on the received configuration information, on the data flow that needs to be synchronously transmitted.

In some embodiments, the configuration information includes an association identifier indicating that the first data flow is associated with the second data flow. In this manner, the first data flow and the second data flow that need to be synchronously transmitted may be indicated, so that the third network device can compute a difference between transmission time of the first data flow and transmission time of the second data flow.

In some embodiments, obtaining the time information includes: obtaining, from a data packet of the first data flow, first transmission time from sending of the first data flow by the application server to arrival of the first data flow at the first network device; and obtaining, from a data packet of the second data flow, second transmission time from sending of the second data flow by the application server or another application server to arrival of the second data flow at the first network device or another first network device. In this manner, the transmission time of the first data flow and the second data flow can be obtained, so that data flow transmission scheduling is implemented based on the transmission time of the data flow between the server and the first network device.

In some embodiments, obtaining the time information further includes: determining a transmission time difference between the first transmission time and the second transmission time. In this manner, transmission scheduling can be performed based on a transmission time difference between transmission time at which the data flow is sent by the application server and transmission time at which the data flow arrives at the first network device.

In some embodiments, the configuration information further includes information about a clock difference between the first data flow and the second data flow, and the transmission time difference is further determined based on the information about the clock difference. In this manner, accuracy of the transmission time difference can be further improved, thereby improving accuracy of end-to-end synchronous transmission of the data flows, and ensuring user service experience.

In some embodiments, obtaining the time information includes: obtaining, from the data packet of at least one of the first data flow and the second data flow, a transmission time difference between first transmission time of the first data flow and second transmission time of the second data flow. In some embodiments, the time information further includes an identifier of a reference data flow, that is, the reported time information includes the transmission time difference and the identifier of the reference data flow. In this manner, transmission scheduling can be performed based on the transmission time difference reported by the first network device, to ensure user service experience.

In some embodiments, performing transmission scheduling includes: configuring a packet delay budget of at least one of the first data flow and the second data flow based on the transmission time difference, so that the first data flow and the second data flow synchronously arrive at a terminal device. In this manner, data flow transmission scheduling is performed by adjusting packet delay budgets of the data flows, to ensure accuracy of end-to-end synchronous transmission of the data flows, and ensure user service experience.

In some embodiments, the configuration information includes a plurality of quality of service configurations with different packet delay budgets, and performing transmission scheduling includes: selecting a quality of service configuration from the plurality of quality of service configurations for at least one of the first data flow and the second data flow based on the transmission time difference. In this manner, quality of service configurations with different packet delay budgets can be selected for data flows, to implement data flow transmission scheduling.

According to a fourth aspect, an embodiment of the present disclosure provides a communication method. The method includes: A fourth network device generates first configuration information, where the first configuration information indicates a first network device to detect and report time information used for synchronous transmission of a first data flow of a service and a second data flow of the service; and sends the first configuration information to the first network device.

In this manner, a solution for synchronization of a plurality of data flows is proposed. In this solution, transmission scheduling is performed on data flows based on time information related to transmission time of the data flows from an application server to the first network device, so that accuracy of end-to-end synchronous transmission of the data flows can be ensured, and user service experience can be ensured. It should be noted that the first data flow and the second data flow may be different data flows of a same user or may be different data flows of different users, and may be sent by a same application server or may be sent by different application servers.

In some embodiments, the method further includes: receiving time information from the first network device; and sending the time information to a second network device, so that the second network device performs transmission scheduling on the first data flow and/or the second data flow. In this manner, the second network device can perform transmission scheduling on the data flow based on the time information reported by the first network device.

In some embodiments, the time information includes first transmission time from sending of the first data flow by the application server to arrival of the first data flow at the first network device. In this manner, the second network device can perform data flow transmission scheduling by using the first transmission time.

In some embodiments, the time information further includes second transmission time from sending of the second data flow by the application server or another application server to arrival of the second data flow at the first network device. In this manner, the second network device can further perform data flow transmission scheduling by using the second transmission time.

In some embodiments, the configuration information includes an association identifier indicating that the first data flow is associated with the second data flow. In this manner, the association identifier may indicate that the first data flow and the second data flow need to be synchronously transmitted, so that the first network device can compute a difference between transmission time of the first data flow and transmission time of the second data flow.

In some embodiments, the time information includes a transmission time difference between first transmission time of the first data flow and second transmission time of the second data flow. In some embodiments, the configuration information further includes an identifier of a reference data flow, that is, the transmission time difference is a difference between time of another data flow and time of the reference data flow. For example, if the identifier of the reference data flow indicates the first data flow, the transmission time difference is a difference between time of another data flow and time of the first data flow. In some embodiments, the time information further includes the identifier of the reference data flow, that is, the reported time information includes the transmission time difference and the identifier of the reference data flow. In this manner, transmission scheduling can be performed based on a transmission time difference between transmission time at which a plurality of data flows are sent by the application server and transmission time at which the plurality of data flows arrive at the first network device.

In some embodiments, the first configuration information further includes information about a clock difference between the first data flow and the second data flow. In this manner, accuracy of the transmission time difference can be further improved, thereby improving accuracy of end-to-end synchronous transmission of the data flows, and ensuring user service experience.

In some embodiments, the first configuration information includes a trigger condition, and the trigger condition indicates a threshold for the first network device to send the transmission time difference, or indicates the first network device to periodically send the transmission time difference. In this manner, reporting triggered based on the time information can be implemented, so that signaling overheads are controlled within an appropriate range.

In some embodiments, the method further includes: generating second configuration information according to a data flow monitoring policy, where the second configuration information indicates a third network device to perform transmission scheduling on the first data flow and the second data flow; and sending the second configuration information to the third network device. In this manner, the third network device can perform data flow transmission scheduling, so that accuracy of end-to-end synchronous transmission of the data flows can be ensured, and user service experience can be ensured.

In some embodiments, the second configuration information is used to enable (for example, indicate or trigger) the third network device to perform transmission scheduling on the first data flow and the second data flow based on the difference between the transmission time of the first data flow and the transmission time of the second data flow. In this manner, the third network device can perform transmission scheduling based on a transmission time difference between transmission time at which a plurality of data flows are sent by the application server and transmission time at which the plurality of data flows arrive at the first network device.

In some embodiments, the second configuration information includes an association identifier indicating that the first data flow is associated with the second data flow, and the second configuration information is used to enable (for example, indicate or trigger) the third network device to determine the transmission time difference between the first transmission time and the second transmission time based on the first transmission time of the first data flow and the second transmission time of the second data flow. In this manner, it can be indicated that the first data flow and the second data flow need to be synchronously transmitted, so that the third network device can compute a difference between transmission time of the first data flow and transmission time of the second data flow.

In some embodiments, the second configuration information further includes information about a clock difference between the first data flow and the second data flow, and the second configuration information further indicates the third network device to determine the transmission time difference based on the information about the clock difference. In this manner, accuracy of the transmission time difference can be further improved, thereby improving accuracy of end-to-end synchronous transmission of the data flows, and ensuring user service experience.

According to a fifth aspect, an embodiment of the present disclosure provides a communication method. The method includes: A fifth network device determines time information used for synchronous transmission of a first data flow of a service and a second data flow of the service, where the time information includes first transmission time from sending of the first data flow by an application server to arrival of the first data flow at a first network device; and the fifth network device sends scheduling information to a second network device based on the time information, where the scheduling information indicates the second network device to perform transmission scheduling on at least one of the first data flow and the second data flow.

In this manner, a solution for synchronization of a plurality of data flows is proposed. In this solution, the fifth network device initiates transmission scheduling of the data flows to the second network device based on time information related to transmission time of the data flows from the application server to the first network device, so that accuracy of end-to-end synchronous transmission of the data flows can be ensured, and user service experience can be ensured. It should be noted that the first data flow and the second data flow may be different data flows of a same user or may be different data flows of different users, and may be sent by a same application server or may be sent by different application servers.

In some embodiments, the fifth network device obtains a first transmission delay of the first data flow between the application server and a terminal device, and obtains a second transmission delay of the first data flow between the first network device and the terminal device; and the fifth network device determines the first transmission time based on the first transmission delay and the second transmission delay.

In some embodiments, the time information further includes second transmission time from sending of the second data flow by the application server to arrival of the second data flow at the first network device.

In some embodiments, the fifth network device obtains a third transmission delay of the second data flow between the application server and the terminal device, and obtains a fourth transmission delay of the second data flow between the first network device and the terminal device; and the fifth network device determines the second transmission time based on the third transmission delay and the fourth transmission delay.

In some embodiments, the time information further includes a transmission time difference between the first transmission time and the second transmission time.

In some embodiments, the fifth network device determines the transmission time difference based on the obtained first transmission time and the obtained second transmission time.

In some embodiments, the scheduling information includes a data flow identifier, indicating at least one of the first data flow and the second data flow.

In some embodiments, the scheduling information further includes a quality of service (Quality of Service, QoS) parameter, the QoS parameter includes a packet delay budget, and the scheduling information indicates the second network device to adjust a packet delay budget of at least one of the first data flow and the second data flow.

In some embodiments, the first network device is a user plane function (User Plane Function, UPF) device, the second network device is a policy control function (Policy Control Function, PCF) device, a third network device is a radio access network (Radio Access Network, RAN) device, a fourth network device is a session management function (Session Management Function, SMF) device, and the fifth network device is a 5G media streaming (5G Media Streaming, 5GMS) application function (Application Function, AF) or an application function network element AF. Herein, the UPF, the PCF, the RAN, the SMF, and the (5GMS) AF may be related network elements in a current 5G network, or may be functional entities that have similar/same functions in a network according to any other protocol currently known or developed in the future.

According to a sixth aspect, an embodiment of the present disclosure provides a network apparatus. The network apparatus includes: a processor and a memory. The memory stores instructions; and when the instructions are executed by the processor, the network apparatus is enabled to perform the method according to any one of the first aspect, the second aspect, the third aspect, the fourth aspect, and the fifth aspect or the embodiments of the first aspect, the second aspect, the third aspect, the fourth aspect, and the fifth aspect.

According to a seventh aspect, an embodiment of the present disclosure provides a chip. The chip includes a processing circuit, and the processing circuit is configured to perform an operation of the method according to any one of the first aspect, the second aspect, the third aspect, the fourth aspect, and the fifth aspect or the embodiments of the first aspect, the second aspect, the third aspect, the fourth aspect, and the fifth aspect.

According to an eighth aspect, an embodiment of the present disclosure provides a computer-readable storage medium. The computer-readable storage medium stores instructions; and when the instructions are executed by an apparatus, the apparatus is enabled to perform an operation of the method according to any one of the first aspect, the second aspect, the third aspect, the fourth aspect, and the fifth aspect or the embodiments of the first aspect, the second aspect, the third aspect, the fourth aspect, and the fifth aspect.

According to a ninth aspect, an embodiment of the present disclosure provides a computer program or a computer program product. The computer program or the computer program product is tangibly stored in a computer-readable medium and includes computer-executable instructions; and when the computer-executable instructions are executed, an apparatus is enabled to perform an operation of the method according to any one of the first aspect, the second aspect, the third aspect, the fourth aspect, and the fifth aspect or the embodiments of the first aspect, the second aspect, the third aspect, the fourth aspect, and the fifth aspect.

### BRIEF DESCRIPTION OF DRAWINGS

With reference to the accompanying drawings and the following detailed descriptions, the foregoing and other features, advantages, and aspects of embodiments of the present disclosure become more apparent. Several implementations of this application are shown herein by way of an example but not a limitation. In the accompanying drawings:
FIG. 1A is a diagram of a 5G network architecture to which some embodiments of the present disclosure may be applied;
FIG. 1B is a diagram of a 5G media streaming (5G Media Streaming, 5GMS) architecture related to some embodiments of the present disclosure;
FIG. 1C is a diagram of a downlink media streaming 5GMS architecture related to some embodiments of the present disclosure;
FIG. 1D is a diagram of a network environment according to some embodiments of the present disclosure;
FIG. 2 is a schematic flowchart of a communication process according to some embodiments of the present disclosure;
FIG. 3 is a schematic flowchart of another communication process according to some embodiments of the present disclosure;
FIG. 4A and FIG. 4B are a schematic flowchart of the communication process shown in FIG. 2 that can be implemented according to some embodiments of the present disclosure;
FIG. 5A and FIG. 5B are a schematic flowchart of the communication process shown in FIG. 3 that can be implemented according to some embodiments of the present disclosure;
FIG. 6A and FIG. 6B are another schematic flowchart of the communication process shown in FIG. 3 that can be implemented according to some embodiments of the present disclosure;
FIG. 7 is a flowchart of a communication process performed at a first network device according to some embodiments of the present disclosure;
FIG. 8 is a flowchart of a communication process performed at a second network device according to some embodiments of the present disclosure;
FIG. 9 is a flowchart of a communication process performed at a third network device according to some embodiments of the present disclosure; and
FIG. 10 is a block diagram of an example device that may be used to implement an embodiment of the present disclosure.

In the accompanying drawings, same or similar reference numerals indicate same or similar elements.

### DESCRIPTION OF EMBODIMENTS

The following describes embodiments of the present disclosure in more detail with reference to the accompanying drawings. Although some embodiments of the present disclosure are shown in the accompanying drawings, it should be understood that the present disclosure can be implemented in various forms, and should not be construed as being limited to embodiments described herein, and instead, these embodiments are provided for a more thorough and complete understanding of the present disclosure. It should be understood that the accompanying drawings and embodiments of the present disclosure are merely used as examples and are not intended to limit the protection scope of the present disclosure.

In descriptions of embodiments of the present disclosure, the term "include" and similar terms thereof should be understood as non-exclusive inclusions, that is, "include but are not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may also be included below.

Embodiments of the present disclosure may be implemented according to any appropriate communication protocol, including but not limited to: cellular communication protocols such as the 3rd generation (3rd Generation, 3G), the 4th generation (4G), the 5th generation (5G), and the 6th generation (6G), wireless local area network communication protocols such as the Institute of Electrical and Electronics Engineers (Institute of Electrical and Electronics Engineers, IEEE) 802.11, and/or any other protocols currently known or developed in the future.

Technical solutions in embodiments of the present disclosure are applied to a communication system that complies with any appropriate communication protocol, for example, a general packet radio service (General Packet Radio Service, GPRS), a global system for mobile communications (Global System for Mobile Communications, GSM), an enhanced data rate for GSM evolution (Enhanced Data rate for GSM Evolution, EDGE) system, a universal mobile telecommunications service (Universal Mobile Telecommunications Service, UMTS), a long term evolution (Long Term Evolution, LTE) system, a wideband code division multiple access (Wideband Code Division Multiple Access, WCDMA) system, a code division multiple access 2000 (Code Division Multiple Access, CDMA 2000) system, a time division-synchronization code division multiple access (Time Division-Synchronization Code Division Multiple Access, TD-SCDMA) system, a frequency division duplex (Frequency Division Duplex, FDD) system, a time division duplex (Time Division Duplex, TDD) system, a 5th generation system or a new radio (New Radio, NR) system, or a future evolved 6th generation communication system.

The term "terminal device" in the present disclosure is any terminal device that can perform wired or wireless communication with a network device or between terminal devices. The terminal device sometimes may be referred to as a user equipment (UE). The terminal device may be any type of mobile terminal, fixed terminal, or portable terminal. For example, the terminal device may include a mobile phone, a station, a unit, a device, a mobile terminal (Mobile Terminal, MT), a subscriber station, a portable subscriber station, an internet node, a communicator, a desktop computer, a laptop computer, a notebook computer, a tablet computer, a personal communication system device, a personal navigation device, a personal digital assistant (Personal Digital Assistant, PDA), a positioning device, a radio broadcast receiver, an e-book device, a game device, an internet of things (Internet of Things, IoT) device, a vehicle-mounted device, an aircraft, a VR device, an AR device, an MR device, a wearable device, any terminal device in a 5G network or an evolved public land mobile network (Public Land Mobile Network, PLMN), a wireless terminal in industrial control, another device that can be used for communication, or any combination thereof. This is not limited in embodiments of the present disclosure.

The term "network device" in the present disclosure is an entity or a node that may be configured to communicate with the terminal device, for example, may be an access network device or a core network device. The access network device may be an apparatus that is deployed in an access network and that provides a communication function for the terminal. The access network device may be a RAN device, a wired access network device, a non-3GPP access network device, a 3GPP access network device, or the like. A main function of the RAN device is to provide a wireless connection, and the RAN device is located between the UE and a core network node. The access network device may include various types of base stations (Base Stations, BS). For example, the access network device may include various forms of macro base stations, micro base stations, picocell base stations, femto base stations, relay stations, access points, remote radio units (Remote Radio Units, RRUs), radio heads (Radio Heads, RHs), and remote radio heads (Remote Radio Heads, RRHs). In systems using different radio access technologies, the access network device may have different names. For example, the access network device is referred to as an evolved NodeB (evolved NodeB, eNB or eNodeB) in a long term evolution (Long Term Evolution, LTE) system network, is referred to as a NodeB (NodeB, NB) in a 3G network, and may be referred to as a gNodeB (gNB) or an NR NodeB (NR NB) in a 5G network. In some scenarios, the access network device may include a central unit (Central Unit, CU) and/or a distributed unit (Distributed Unit, DU). The CU and DU may be deployed in different places. For example, the DU is remotely deployed in a heavy-traffic area, and the CU is deployed in a central equipment room. Alternatively, the CU and the DU may be deployed in a same equipment room. Alternatively, the CU and the DU may be different components in a same rack.

The core network device may be a network element (Network Function, NF), and includes: an access and mobility management function (Access and Mobility Management Function, AMF), whose main functions include user registration management, reachability detection, SMF node selection, mobility state transition management, and the like; an SMF, whose main functions are control session establishment, modification, and deletion, user plane node selection, and the like; a UPF, whose main functions are data packet routing and forwarding, serving as a mobility anchor, an uplink classifier to support routing a data flow to a data network, and a branching point to support a multi-homing protocol data unit (Protocol Data Unit, PDU) session, and the like; a PCF, whose main functions are serving as a policy decision point and providing rules such as service data flow and application detection, gating, QoS, and flow-based charging control; a unified data management (Unified Data Management, UDM) function, whose main function is storing user subscription data; an application function (Application Function, AF), whose main functions are interacting with a 3GPP core network to provide services, and affect data flow routing, access network capability exposure, policy control, and the like; a network exposure function (Network Exposure Function, NEF), whose main functions are securely exposing services and capabilities, for example, third-party, edge computing, and AF services and capabilities, provided by a 3GPP network function; a data network (Data Network, DN), including operator services, for example, an internet access service or a third-party service; and a network data analytics function (Network Data Analytics Function, NWDAF), providing network data collection and analytics functions based on technologies such as big data and artificial intelligence.

For ease of description, in subsequent embodiments of the present disclosure, the foregoing apparatus that provides a wireless communication function for the terminal device is collectively referred to as a network device.

The term "QoS flow (QoS flow)" in the present disclosure means that in a 5GS, when a UE has a service communication requirement, a PDU session is established, and a corresponding QoS flow specifically carries a data flow in the PDU session. Specifically, the UE obtains an internet protocol (Internet Protocol, IP) address by establishing the PDU session, to interact with an external service server, and implement service communication; and in the 5GS, the UE maps corresponding services to different QoS flows based on data flow description information such as a service data flow template (Service Data Flow template, SDF template), performs corresponding QoS processing, and performs data packet transmission processing in the QoS flows based on a same QoS parameter. In the present disclosure, the "QoS flow" and the "data flow" may be interchangeably used.

In the present disclosure, the term "QoS parameter" indicates a processing requirement, for example, a packet delay budget, a data packet loss rate, and a maximum guaranteed rate, of data in each QoS flow when the data is transmitted in the 5GS.

In the present disclosure, the term "GTP-U tunnel" is a user plane general packet radio service (General Packet Radio Service, GPRS) tunneling protocol (GPRS Tunneling Protocol-User Plane, GTP-U). In a PDU session establishment process, a GTP-U tunnel is used for a connection between a RAN and a UPF, that is, data from/to a UE side is added to the tunnel for sending. The GTP-U tunnel is at a PDU session granularity, to be specific, a GTP-U tunnel between the RAN and the UPF is established for each PDU session.

In the present disclosure, the term "QoS flow identifier (QoS Flow Identifier, QFI)" is a unique identifier identifying different QoS flows in one PDU session.

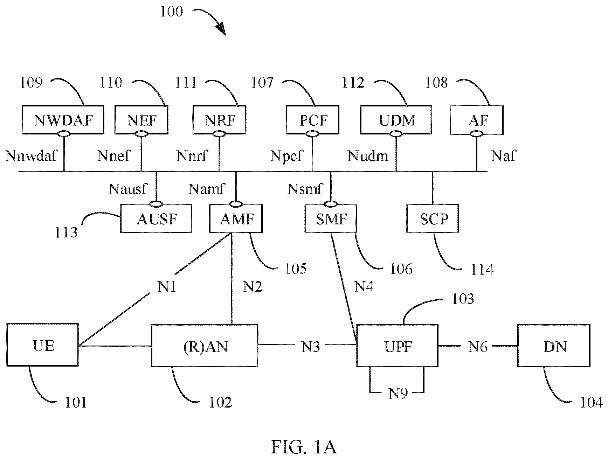

FIG. 1A is a diagram of a 5G network architecture 100 to which embodiments of the present disclosure may be applied. As shown in FIG. 1A, the 5G network architecture 100 may include a UE 101, a (radio) access network (R)AN 102, a UPF 103, a DN 104, an AMF 105, an SMF 106, a PCF 107, an AF 108, an NWDAF 109, an NEF 110, a network repository function (Network Repository Function, NRF) 111, a UDM 112, an authentication server function (Authentication Server Function, AUSF) 113, and a service communication proxy (Service Communication Proxy, SCP) 114. The DN 104 may include an application server (Application Server, AS).

According to some embodiments of the present disclosure, QoS parameters of data flows may be adjusted based on information related to transmission time in an N6 path from sending of the data flows by the DN 104 (for example, the AS) to arrival of the data flows at the UPF 103, so that the plurality of data flows may synchronously arrive at the UE 101.

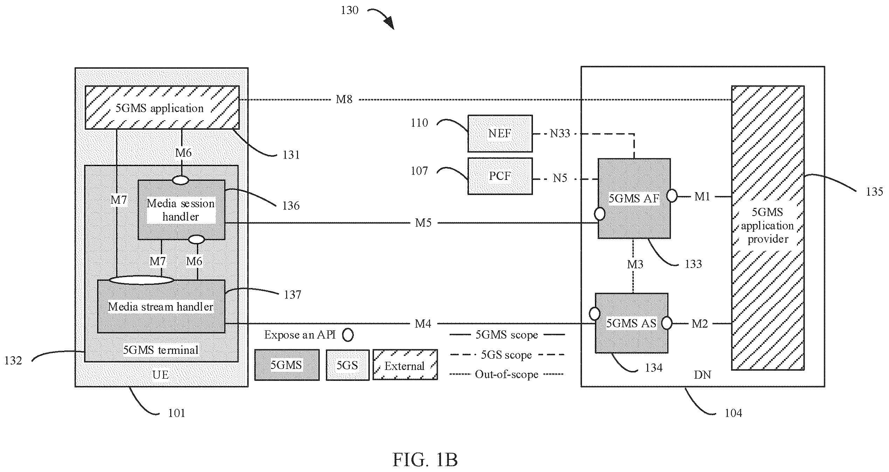

FIG. 1B is a diagram of a 5GMS architecture 130 related to some embodiments of the present disclosure. As shown in FIG. 1B, the 5GMS architecture 130 mainly includes a 5GMS application (5GMS-Aware Application) 131, a 5GMS terminal (5GMS Client) 132, a 5GMS AF 133, a 5GMS application server (5GMS AS) 134, a 5GMS application provider (5GMS Application Provider) 135, and the like. In FIG. 1B, light-colored functional entities, for example, the NEF 110 and the PCF 107, are all network elements in the 5G architecture; dark-colored functional entities are network elements in the 5GMS, for example, the 5GMS AF 133, the 5GMS AS 133, the 5GMS terminal 132, a media session handler (Media Session Handler, MSH) 136, a media stream handler (Media Stream Handler) 137, and the 5GMS AF 133, and interact with the 5G network through a long dashed line N33 or an N5 interface; and functional entities represented by boxes filled with slashes, for example, the 5GMS application provider 135 and the 5GMS application 131, are all autonomously deployed by an application service vendor. An M3 interface between the 5GMS AF 133 and the 5GMS AS 134 is not currently defined. When the 5GMS AF 133 and the 5GMS AS 134 are in an external untrusted area, the interface depends on a third-party provider.

In the 5GMS architecture 130, the 5GMS application 131 may be considered as an application (Application, App) on a side of the terminal 132, and the 5GMS application provider 135 is mainly a content providing server of these App applications. The 5GMS AF 133 is also a type of 3GPP-defined AF 108, and is intended to implement information exchange between an external server and a 3GPP network, for example, capability exposure or parameter providing. The 5GMS AF 133 may also be an AF dedicated to a media streaming service. The 5GMS AS 134 may be deployed and controlled by a mobile network operator (Mobile Network Operator, MNO), or may be provided by an external third-party application, and is used as a media streaming application server, for example, similar to a content delivery network (Content Delivery Network, CDN) server.

A side of the 5GMS terminal 132 may be specifically divided into the media session handler 136 and the media stream handler 137. For a downlink media streaming service, a media stream handler may also be referred to as a media player (Media Player, MP). The media session handler 136 is configured to interact with the 5GMS AF 133, to implement media session creation, control, and transmission, and the media session handler 136 may also expose a related application programming interface (Application Programming Interface, API) for an upper-layer 5GMS application to invoke. The media player MP is mainly configured to: perform media streaming transmission, encoding/decoding, and playing (for a downlink service) with the 5GMS AS 134, and provide an API interface for the upper-layer 5GMS application and the media session handler 136 to implement media playing and media session control.

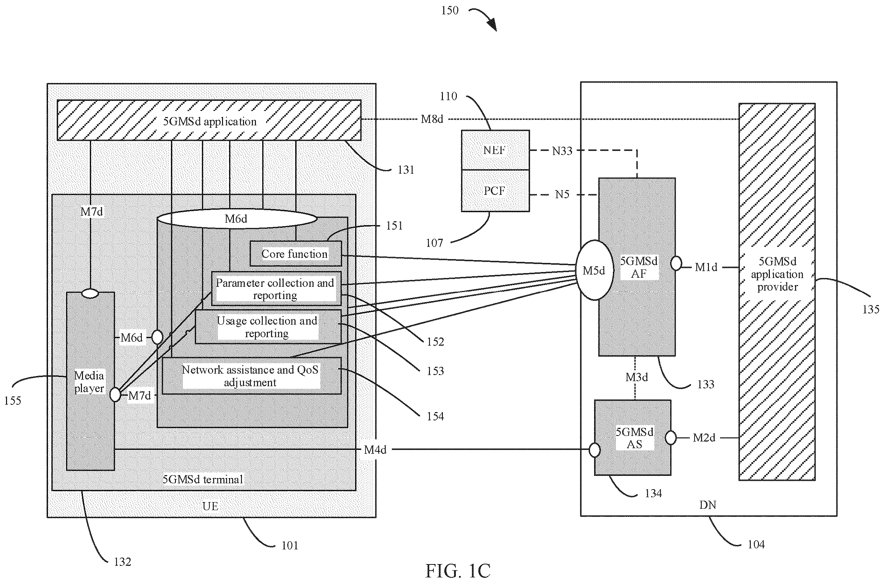

FIG. 1C is a diagram of a downlink media streaming 5GMS (5G downlink Media Streaming, 5GMSd) architecture 150 related to some embodiments of the present disclosure. The architecture is also a most common application scenario. To be specific, a UE selects a specific media stream for playing in a live streaming or on-demand manner. For convenience, unless otherwise specified, a 5GMS AF is directly used below to represent a 5GMSd AF.

As shown in FIG. 1C, the side of the 5GMS terminal 132 may include many sub-functions, that is, a side of the media session processing module 136 supports many sub-module functions. For example, a core function sub-module 151 is configured to implement core functions of session establishment, management, and control; a parameter collection and reporting sub-module 152 is configured to perform parameter collection and reporting configuration on the side of the terminal, to implement parameter collection and reporting on the side of the terminal; a usage collection and reporting sub-module 153 is configured to: perform collection and configuration on usage information of a media streaming service on the side of the terminal, and report the usage information to the side of the 5GMS AF 133 based on configuration information; and a network assistance and QoS adjustment sub-module 154 is configured to: interact with a network through the 5GMS AF 133 or directly interact with the RAN 102, and request corresponding policy adjustment (for example, QoS adjustment) and network assistance from the network side.

The media stream processing module or the side of the media player 155 may serve as a media access terminal (for example, serve as a desktop and mobile architecture for system hardware (Desktop and mobile Architecture for System Hardware, DASH) terminal), or a functional sub-module for performing media data decryption, usage policy and log recording, a digital rights management (Digital Rights Management, DRM) client, media data decoding, media displaying and rendering, and the like.

Specifically, the 5GMS application provider 135 creates a service provisioning (Service Provisioning) session, and sends a related feature, for example, a parameter collection and reporting feature, to the 5GMS AF 133. The 5GMS AF 133 determines service access information (Service Access Information, SAI) based on feature information sent by the 5GMS application provider 135, and returns the SAI or index information of the SAI to a server of the 5GMS application provider 135. Then, when a user starts a media streaming service, the user obtains the SAI through an M8 or M5 interface, and performs configuration and execution based on the feature in the SAI. For example, the 5GMS terminal 132 configures the feature based on a corresponding sub-function in the obtained SAI. The parameter collection feature is used as an example. After the 5GMS terminal 132 obtains SAI configuration information, the 5GMS terminal 132 configures the media player 155 to perform parameter collection based on configuration information in the SAI configuration information, and sends collected parameter information to the side of the media session processing module 136 based on a reporting periodicity in the configuration. Then, the media session processing module 136 sends the collected information to the side of the 5GMS AF 133 through the M5 interface, to complete parameter collection on the side of the terminal. It should be noted that for ease of description, all 5GMS network elements in embodiments of the present disclosure are 5GMSd network elements, that is, for the downlink media streaming service. However, embodiments of the present disclosure are not limited thereto.

As described above, for real-time media services, for example, currently emerging VR/AR/MR services, cloud gaming services, and tactile multi-modal services, an end-to-end delay has an extremely strict requirement, and there are usually a plurality of different forms of data flows in a media transmission process. To ensure user experience, synchronous transmission of a plurality of data flows needs to be ensured.

For the synchronous transmission of the plurality of data flows, in a possible manner, a QoS monitoring (monitoring) mechanism is used to monitor a time difference between the plurality of data flows in the 5GS based on a multi-flow time difference requirement provided by the AF, and a delay of an uplink or downlink data flow between the UE and the UPF is measured and obtained based on the QoS monitoring mechanism, to perform corresponding QoS policy adjustment. For example, QoS parameters such as different packet delay budgets are configured for the QoS flows, to ensure synchronization of the plurality of data flows. In another possible manner, a same QoS policy may be set for the plurality of flows based on a synchronization requirement, of the plurality of flows, that is provided by the third-party AF, to ensure that the plurality of flows have a same time transmission requirement in the 5GS. In another possible manner, unified collaborative access management is performed based on an association relationship between a plurality of data flows in a process of session establishment, switching, and the like. For example, the plurality of data flows are used as a whole, and QoS flow creation or modification of all the plurality of data flows is accepted or rejected.

The foregoing manner mainly focuses on configuring a consistent transmission QoS parameter for the plurality of corresponding data flows, and performing collaborative access control. However, a case in which a data flow is transmitted between the AS and the UPF is not considered, and a clock difference on a data source side of a data source of the plurality of flows in a transmission process is not considered.

According to some embodiments, the present disclosure provides a solution of synchronous transmission of a plurality of data flows, to comprehensively consider a delay difference in a transmission process (that is, N6) between the application server and the UPF, and perform corresponding synchronization assurance, to ensure user service experience. In this solution, a first network device (for example, a UPF) may receive configuration information, where the configuration information is used to enable the first network device to report time information used for synchronous transmission of a first data flow of a service and a second data flow of the service. Then, the first network device may determine first transmission time from sending of the first data flow by an application server to arrival of the first data flow at the first network device, and report, based on the first transmission time, the time information used for synchronous transmission of the first service flow and the second service flow. In some embodiments, a second network device (for example, a PCF) may receive the time information used for synchronous transmission of the first data flow and the second data flow, and perform transmission scheduling on at least one of the first data flow and the second data flow based on the time information. Alternatively or additionally, a third network device (for example, a RAN) may obtain, from a data packet of at least one of the first data flow and the second data flow, the time information used for synchronous transmission of the first data flow and the second data flow, and the third network device may perform transmission scheduling on at least one of the first data flow and the second data flow based on the time information. It should be noted that the first data flow and the second data flow may be different data flows of a same user or may be different data flows of different users, and may be sent by a same application server or may be sent by different application servers.

In this manner, transmission scheduling may be performed on a data flow based on time information related to transmission time of the data flow from the application server to the first network device, so that a flexible data flow transmission scheduling manner is provided, and user service experience is ensured.

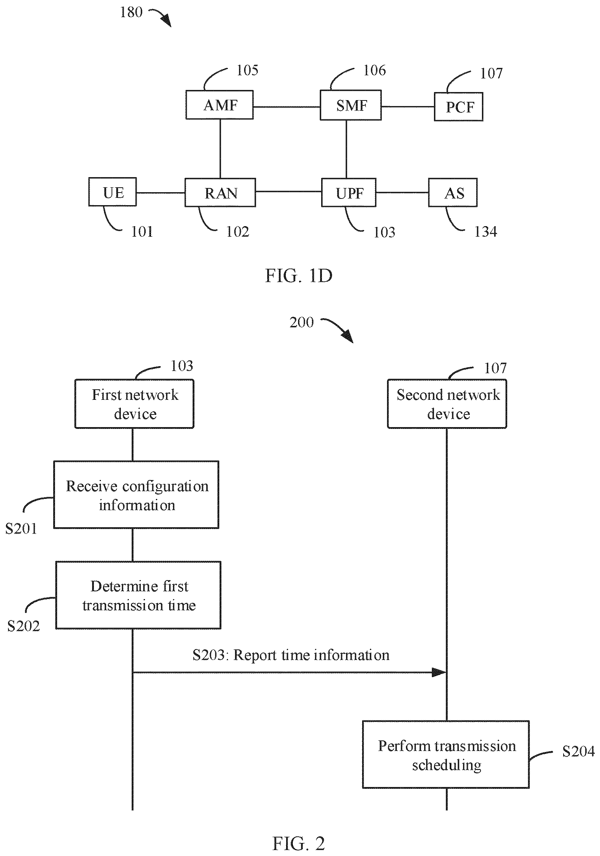

FIG. 1D is a diagram of a network environment 180 according to some embodiments of the present disclosure. For ease of understanding, FIG. 1D is described with reference to FIG. 1A to FIG. 1C. For example, the network environment 180 may include the UE 101, the RAN 102, the UPF 103, the AS 134, the AMF 105, the SMF 106, and the PCF 107 as described in FIG. 1A to FIG. 1C. Although only one network element is shown in FIG. 1A, during implementation, any appropriate quantity of network elements may be included based on a scale and an architecture of a network, for example, a plurality of ASs 134 and UPFs 103 may be included, and data flows are sent by a same AS 134 or different ASs 134, and are received by one or more UPFs 103 and sent to one or more UEs.

In some embodiments, the UPF 103 may collect statistics on an arrival status of a data packet of each QoS flow, for example, a transmission time from sending of each QoS flow by the AS 133 to arrival of the QoS flow at the UPF 103, or a difference between transmission time of a data packet of one flow and transmission time of a data packet of another flow. Optionally, the UPF 103 may perform reporting based on a difference threshold or a periodicity. The PCF 107 may perform QoS policy adjustment based on a time measurement result of a QoS flow granularity.

In some embodiments, the UPF 103 may add an arrival status of a data packet of each QoS flow to a side of the data packet (for example, to a GTP-U layer of the data packet, for example, in a form of +2, +3, or 0) and send the data packet to a side of the RAN 102. The RAN 102 may perform corresponding synchronization processing based on an arrival status of a GTP-U layer data packet of a corresponding data packet or a multi-flow association identifier, to ensure that the data packet can synchronously arrive at a side of the UE. For example, the side of the RAN 102 may perform dynamic adjustment on each QoS flow. For example, the RAN 102 may adjust a packet delay budget (Packet Delay Budget, PDB) of the QoS flow. Optionally, the action may be performed when a threshold is exceeded or performed periodically. Optionally, this solution may be implemented by using an AQP mechanism.

FIG. 2 is a schematic flowchart of a communication process 200 according to some embodiments of the present disclosure. For ease of understanding, FIG. 2 is described with reference to FIG. 1D. For example, a first network device (for example, UPF) 103 and a second network device (for example, PCF) 107 may be involved in the communication process 200. The communication process 200 includes the following steps.

S201: The first network device 103 may receive configuration information, where the configuration information is used to enable the first network device 103 to report time information used for synchronous transmission of a first data flow of a service and a second data flow of the service. For example, the first network device 103 receives the configuration information from a session management network element 106. Specifically, the configuration information is used to enable the first network device to detect and report the time information used for synchronous transmission of the first data flow and the second data flow (for example, the configuration information includes a parameter indicating detection or reporting, and the configuration information may further include a trigger condition and an association identifier, to enable the first network device to perform detection, reporting, or the like based on these parameters). Optionally, the configuration information further includes at least one of the following: a data packet detection rule used to detect the first data flow and/or the second data flow, a mechanism used to detect first transmission time from sending of the first data flow by an application server to arrival of the first data flow at a side of the first network device, an association identifier used to associate the first data flow with the second data flow, a trigger condition used to trigger the first network device to report the time information, and/or identification information of a reference data flow. The identification information of the reference data flow identifies the reference data flow. When the reported time information includes a transmission time difference and the identification information of the reference service flow, it indicates that the transmission time difference is determined based on the reference data flow.

S202: The first network device 103 may determine first transmission time from sending of a data packet of the first data flow by the application server (for example, an AS 133) to arrival of the data packet of the first data flow at the first network device 103.

The first network device determines, based on the configuration information, a time at which the data packet of the first data flow is sent by the application server and a time at which the data packet of the first data flow arrives at the first network device. The first network device determines the first transmission time based on the time at which the data packet of the first data flow is sent by the application server and the time at which the data packet of the first data flow arrives at the first network device. For example, timestamp information carried in the data packet of the first data flow, for example, real-time transport protocol (Real-time Transport Protocol, RTP) timestamp information, may represent collection and generation time of a media unit (for example, a video frame, a video slice, an audio frame, and tactile information) corresponding to the data packet and/or represent the time at which the data packet is sent by the application server.

S203: The first network device 103 reports, based on the first transmission time, the time information used for synchronous transmission of the first data flow and the second data flow. For example, the first network device 103 may send, to the second network device, the time information used for synchronous transmission of the first data flow and the second data flow.

In an implementation, the time information may be the first transmission time from sending of the first data flow by the application server to arrival of the first data flow at the first network device 103. For example, the first network device determines the first transmission time through statistics collection based on the timestamp information carried in the data packet of the first data flow and the time at which the data packet is received. The first transmission time may be an average value of transmission time, from sending of the data packet of the first data flow by the application server to arrival of the data packet of the first data flow at the first network device, that is counted in a period of time, or may be transmission time from sending of any data packet by the application server to arrival of the data packet at the first network device. This is not limited in the present disclosure.

In an implementation, the first network device 103 may further determine second transmission time based on timestamp information carried in a data packet of the second data flow and time at which the data packet is received. The time information may be the first transmission time from sending of the first data flow by the application server to arrival of the first data flow at the first network device 103 and the second transmission time from sending of the second data flow by the application server to arrival of the second data flow at the first network device 103.

In an implementation, the first network device 103 determines the first transmission time and the second transmission time according to the foregoing solution, and correspondingly determines the transmission time difference. Alternatively, the time information reported by the first network device may be the transmission time difference between the first transmission time and the second transmission time. In an implementation, the configuration information includes an association identifier indicating that the first data flow is associated with the second data flow, and the association identifier may also indicate that the first data flow and the second data flow need to be synchronously transmitted. The first network device 103 determines the transmission time difference between the first transmission time and the second transmission time based on the association identifier. In an implementation, the configuration information further includes the identification information indicating the reference data flow. For example, the identification information of the reference data flow may be specifically a data flow identifier, data flow description information, or the like corresponding to the reference data flow. The first network device determines a difference between transmission time of another data flow and transmission time of the reference data flow. For example, if an identifier of the reference data flow indicates the first data flow, the transmission time difference is a difference between time of the another data flow and time of the first data flow. In an implementation, the time information further includes an identifier of the reference data flow, that is, the reported time information includes the transmission time difference and the identifier of the reference data flow.

In an implementation, the first network device 103 further determines the transmission time difference based on information about a clock difference. The configuration information further includes the information about the clock difference between the first data flow and the second data flow, and the first network device 103 further determines the transmission time difference based on the information about the clock difference. For example, clocks on which timestamps in the data packets of the first data flow and the second data flow are based may be asynchronous. For example, the clock information correspondingly used by the first data flow is different from the clock information correspondingly used by the second data flow. That is, a timestamp in a data packet #A of the first data flow is t1, and a timestamp in a data packet #B of the second data flow is t2. Actually, because the clocks on both sides are different, when the two data packets are generated/sent at the same time, t1 and t2 are different, where a clock difference x=t1-t2 or t2-t1. The first network device 103 determines arrival time of the data packet of the first data flow and arrival time of the data packet of the second data flow based on a clock on a side of the first network device 103. Therefore, when determining the transmission time difference, the first network device 103 may further compute a clock difference between the first data flow and the second data flow.

In an implementation, the first network device 103 sends the transmission time difference based on the trigger condition. For example, the first network device 103 sends the transmission time difference when the transmission time difference reaches a threshold, or periodically sends the transmission time difference. The configuration information further includes the trigger condition, and the trigger condition indicates a threshold for triggering the first network device 103 to send the transmission time difference, or indicates a periodicity for sending the transmission time difference by the first network device.

In an implementation, the first network device 103 determines the first transmission time and/or the second transmission time based on a mechanism in the configuration information. For example, the configuration information further includes a mechanism for detecting the first transmission time from sending of the first data flow by the application server to arrival of the first data flow at the side of the first network device, that is, indicating the first network device 103 to determine the first transmission time based on a timestamp carried in a downlink data packet and time at which the downlink data packet arrives at the side of the first network device.

The first network device 103 may send the time information to the second network device 107 through the session management network element. The second network device 107 may receive the time information used for synchronous transmission of the first data flow and the second data flow.

S204: The second network device 107 may perform transmission scheduling on at least one of the first data flow and the second data flow based on the time information.

In an implementation, the second network device 107 determines the transmission time difference based on the first transmission time reported by the first network device 103 and second transmission time provided by another first network device, and performs QoS policy adjustment on the first data flow and/or the second data flow based on the transmission time difference.

In an implementation, the second network device 107 determines the transmission time difference based on the first transmission time and the second transmission time that are reported by the first network device 103, and performs QoS policy adjustment on the first data flow and/or the second data flow based on the transmission time difference.

In an implementation, the second network device 107 performs QoS policy adjustment on the first data flow and/or the second data flow based on the transmission time difference reported by the first network device 103.

In an implementation, the second network device 107 determines a relative transmission time difference between two data flows based on the time information and a clock difference between a plurality of data flows, and performs QoS policy adjustment on the first data flow and/or the second data flow.

In an implementation, the second network device 107 performs QoS policy adjustment on the first data flow and/or the second data flow based on the time information, for example, configures a packet delay budget of at least one of the first data flow and the second data flow.

In an implementation, the second network device 107 may further perform transmission scheduling based on the transmission time of the first data flow and/or the second data flow and an end-to-end transmission delay requirement. The end-to-end delay requirement indicates a transmission delay requirement from the application server to a side of a terminal device.

In an implementation, the second network device 107 determines third transmission time from sending of the first data flow by the application server to arrival of the first data flow at the second network device 107. The time information includes first sending time at which the data packet of the first data flow is sent or generated by the application server. The second network device 107 obtains the first sending time, and correspondingly determines, based on the first sending time, the third transmission time from sending of the data packet of the first data flow by the application server to receiving of the data packet of the first data flow by the second network device 107.

In an implementation, the second network device 107 determines fourth transmission time from sending of the second data flow by the application server to arrival of the second data flow at the second network device 107. The time information further includes second sending time at which the data packet of the second data flow is sent or generated by the application server. The second network device 107 obtains the second sending time, and correspondingly determines, based on the second sending time, the fourth transmission time from sending of the data packet of the second data flow by the application server to receiving of the data packet of the second data flow by the second network device 107.

In an implementation, the second network device 107 determines a transmission time difference between the third transmission time and the fourth transmission time. The configuration information includes an association identifier indicating that the first data flow is associated with the second data flow, and the association identifier may also indicate that the first data flow and the second data flow need to be synchronously transmitted. The second network device 107 determines, based on the association identifier, the transmission time difference between the third transmission time and the fourth transmission time. In an implementation, the configuration information further includes the information about the clock difference between the first data flow and the second data flow, and the second network device 107 further determines the transmission time difference based on the information about the clock difference.

In an implementation, the second network device 107 performs, based on the transmission time difference between the third transmission time and the fourth transmission time, QoS policy adjustment on the first data flow and/or the second data flow.

In an implementation, the second network device 107 further receives data flow synchronization information from an application function device, where the data flow synchronization information includes at least one of the following: description information of the first data flow and the second data flow; an association identifier, indicating that the first data flow is associated with the second data flow; or a synchronization indication, indicating to perform transmission scheduling on the first data flow and the second data flow.

In an implementation, the second network device 107 generates, based on the data flow synchronization information, a data flow policy indicating the first network device 103 to report the time information.

In an implementation, the second network device 107 generates, based on the data flow synchronization information, a plurality of quality of service configurations with different packet delay budgets, for example, for the third network device (for example, RAN) 102 to select an appropriate quality of service configuration from the plurality of quality of service configurations when performing transmission scheduling on the first data flow and/or the second data flow.

According to the foregoing embodiment described with reference to FIG. 2, the second network device may perform transmission scheduling on the data flows based on the time information related to the transmission time of the data flows from the application server to the first network device, so that accuracy of end-to-end synchronous transmission of the data flows can be ensured, and user service experience can be ensured.

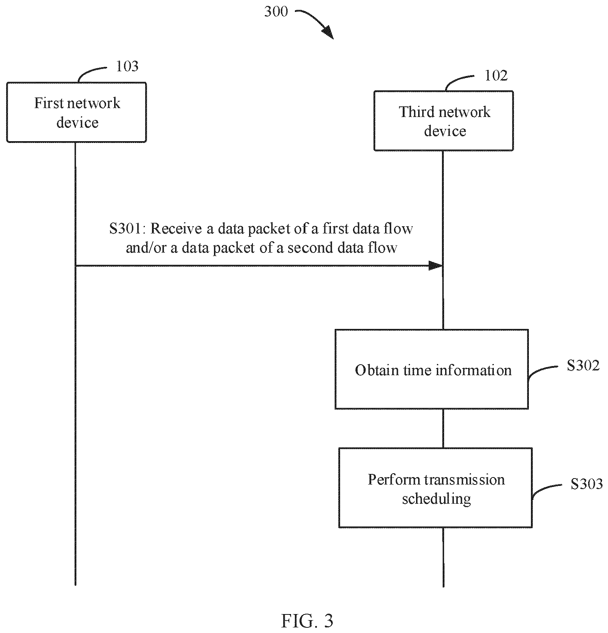

FIG. 3 is a schematic flowchart of a communication process 300 according to some embodiments of the present disclosure. For ease of understanding, FIG. 3 is described with reference to FIG. 1D. For example, a first network device (for example, UPF) 103 and a third network device (for example, RAN) 102 may be involved in the communication process 300. The communication process 300 includes the following steps.

S301: The third network device 102 receives a data packet of a first data flow of a service and/or a data packet of a second data flow of the service. The third network device 102 obtains, from a received data packet of at least one of the first data flow and the second data flow, time information used for synchronous transmission of the first data flow and the second data flow.

In an implementation, the third network device 102 obtains, from one or more data packets of the first data flow, first transmission time from sending of the first data flow by an application server to arrival of the first data flow at the first network device 103. For example, the time information includes the first transmission time from sending of the first data flow by the application server to arrival of the first data flow at the first network device 103, and the third network device 102 obtains the first transmission time from the one or more data packets (for example, a GTP-U layer of the data packet) of the first data flow. That the data flow is sent by the application server may indicate that the data packet of the data flow is sent by the application server. Specifically, the time at which the first data flow is sent by the application server may represent, based on timestamp information carried in the data packet of the first data flow, for example, RTP timestamp information, collection and generation time of a media unit (for example, a video frame, a video slice, an audio frame, and tactile information) corresponding to the data packet and/or the time may represent the time at which the data packet is sent by the application server.

In an implementation, the third network device 102 obtains, from one or more data packets of the second data flow, second transmission time from sending of the second data flow by the application server to arrival of the second data flow at the first network device 103. For example, the time information further includes the second transmission time from sending of the second data flow by the application server to arrival of the second data flow at the first network device 103 or another first network device, and the second data flow may be sent by an application server that is the same as the first data flow or another application server. The third network device 102 obtains the second transmission time from the one or more data packets (for example, a GTP-U layer of the data packet) of the second data flow.

In an implementation, the third network device 102 further receives configuration information indicating the third network device 102 to perform transmission scheduling. For example, the third network device 102 receives the configuration information from an SMF 106.

In an implementation, the third network device 103 determines a transmission time difference between the first transmission time and the second transmission time based on the first transmission time and the second transmission time. The configuration information includes an association identifier indicating that the first data flow is associated with the second data flow, and the association identifier may also indicate that the first data flow and the second data flow need to be synchronously transmitted. The third network device 103 determines, based on the association identifier, the transmission time difference between the first transmission time and the second transmission time. In an implementation, the configuration information further includes information about a clock difference between the first data flow and the second data flow, and the third network device 102 further determines the transmission time difference based on the information about the clock difference.

In an implementation, the third network device 103 obtains the transmission time difference between the first transmission time and the second transmission time from the reported time information. The time information includes the transmission time difference between the first transmission time and the second transmission time, and the third network device 102 may directly obtain the transmission time difference from one or more data packets (for example, a GTP-U layer of the data packet) of at least one of the first data flow and the second data flow. In an implementation, the time information further includes an identifier of a reference data flow, that is, the reported time information includes the transmission time difference and the identifier of the reference data flow.

In an implementation, the third network device 102 determines third transmission time from sending of the first data flow by the application server to arrival of the first data flow at the third network device 102. The time information includes first sending time at which the data packet of the first data flow is sent or generated by the application server. The third network device 102 obtains the first sending time from one or more data packets (for example, a GTP-U layer of the data packet) of the first data flow, and correspondingly determines the third transmission time from sending of the data packet of the first data flow by the application server to receiving of the data packet of the first data flow by the third network device 102.

In an implementation, the third network device 102 determines fourth transmission time from sending of the second data flow by the application server to arrival of the second data flow at the third network device 102. The time information further includes second sending time at which the data packet of the second data flow is sent or generated by the application server. The third network device 102 obtains the second sending time from one or more data packets (for example, a GTP-U layer of the data packet) of the second data flow, and correspondingly determines the fourth transmission time from sending of the data packet of the second data flow by the application server to receiving of the data packet of the second data flow by the third network device 102.

In an implementation, the third network device 102 determines a transmission time difference between the third transmission time and the fourth transmission time. The configuration information includes an association identifier indicating that the first data flow is associated with the second data flow, and the association identifier may also indicate that the first data flow and the second data flow need to be synchronously transmitted. The third network device 103 determines, based on the association identifier, the transmission time difference between the third transmission time and the fourth transmission time. In an implementation, the configuration information further includes information about a clock difference between the first data flow and the second data flow, and the third network device 102 further determines the transmission time difference based on the information about the clock difference.

S303: The third network device 102 performs transmission scheduling on at least one of the first data flow and the second data flow based on the time information. The time information includes one or more of the time information described in step S302.

In an implementation, the third network device 102 performs QoS policy adjustment on the first data flow and/or the second data flow based on the time information, for example, configures a packet delay budget of at least one of the first data flow and the second data flow, so that the first data flow and the second data flow synchronously arrive at the terminal device 101.

In an implementation, the configuration information includes a plurality of quality of service configurations with different packet delay budgets, and the third network device 102 may select an appropriate quality of service configuration from the plurality of quality of service configurations for at least one of the first data flow and the second data flow based on the time information.

According to the foregoing embodiment described with reference to FIG. 3, in the data packet of at least one of the first data flow and the second data flow, the third network device may obtain the time information related to the transmission time of the data flows from the application server to the first network device, and perform transmission scheduling on the data flows based on the time information, so that accuracy of end-to-end synchronous transmission of the data flows can be ensured, and user service experience can be ensured.

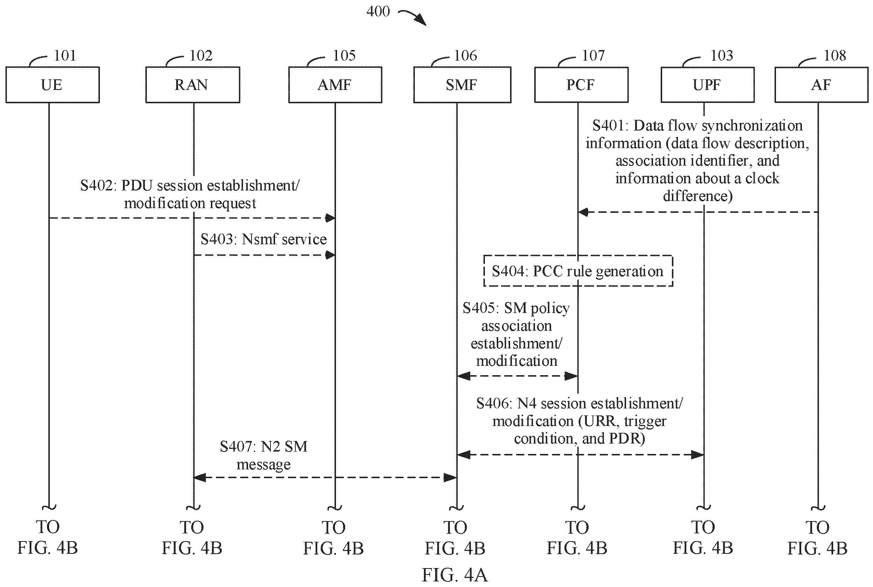

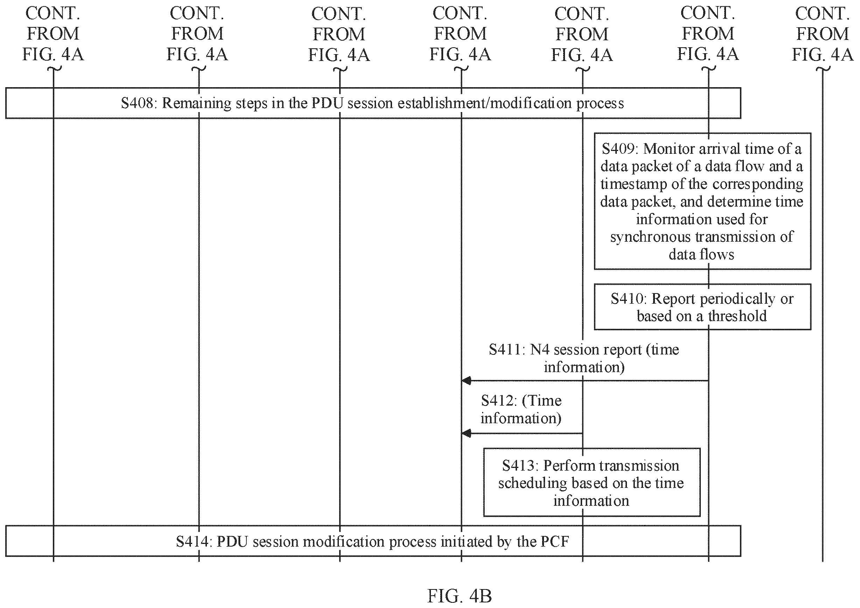

FIG. 4A and FIG. 4B are a schematic flowchart of a communication process 400 according to some embodiments of the present disclosure. The communication process 400 may be an example implementation of the communication process 200. A UE 101, a RAN 102, a UPF 103, an AMF 105, an SMF 106, a PCF 107, and an AF 138 may be involved in the communication process 400. Although only one network element is shown in FIG. 4A and FIG. 4B, during implementation, any appropriate quantity of network elements may be included based on a scale and an architecture of a network, for example, a plurality of UPFs 103 may be included, and data flows are sent by a same or different ASs and received by one or more UPFs 103. The communication process 400 includes the following steps.

S401: Optionally, the PCF 107 may receive data flow synchronization information from the AF 108, where the data flow synchronization information may include description information of a first data flow and a second data flow that need to be synchronized, the data flow synchronization information may further include an association identifier indicating that the first data flow is associated with the second data flow, the data flow synchronization information may further include a synchronization indication indicating to perform transmission scheduling on the first data flow and the second data flow, and optionally, the data flow synchronization information may further include an end-to-end delay requirement, namely, a transmission delay requirement from an application server to a side of the UE.

In an implementation, the AF 108 may send data flow synchronization information of a corresponding service data flow to the PCF 107 through an N33 interface (through an NEF) or an N5 interface. Specifically, the AF 108 may send an AF request (AF Request) message to the PCF 107, where the AF request message carries SDF flow description information of the service, for example, an IP quintuple, an application ID (where the application ID corresponds to the service and may be used for data flow detection), and the data flow synchronization information, and may specifically include information such as a clock difference between a plurality of flows. For example, when the AF is deployed in an untrusted area, the AF 108 may invoke an Nnef_AFSessionWithQoS service on a side of the NEF, that is, interact with the PCF through the NEF; or when the AF is in a trusted area, the AF directly invokes an Npcf_PolicyAuthorize service on a side of the PCF.

S402: Due to a reason such as starting of a corresponding service, the UE 101 may initiate a PDU session establishment or modification procedure, to carry the corresponding service. It should be noted that this step is optional. After a media service is started, there may be an existing PDU session and a QoS flow that can meet a requirement such as QoS of the media service, and directly carry the corresponding service.

S403: The AMF 105 receives a PDU session establishment or modification message from the side of the UE 101, and sends a session establishment/management request in the PDU session establishment or modification message to a side of the SMF 106, for example, may send corresponding content to the SMF 106 by using an Nsmf_PDUSession_CreateSMContext/UpdateSMContext service.

S404: The PCF 107 may generate a data flow policy indicating to report time information, where the time information is used for synchronous transmission of the first data flow and the second data flow.

In an implementation, the PCF 107 may determine a data flow monitoring policy for a plurality of data flows based on the data flow synchronization information from the side of the AF 108, to monitor and report time statuses of the plurality of data flows arriving at a 5GS, namely, time information for sending a data packet of each data flow by the application server to arrival of the data packet of each data flow at the 5GS (UPF), to ensure that the PCF 107 can subsequently perform corresponding policy adjustment based on time at which different data flows arrive at a network side. The data flow monitoring policy is placed in a policy and charging control (Policy and Charging Control, PCC) rule. For example, each PCC rule is for one data flow. Then, the PCF 107 sends the corresponding PCC rule to the side of the SMF 106. Specifically, in a session management policy association establishment or modification procedure initiated by the SMF 106, the PCF 107 may send a corresponding QoS parameter to the side of the SMF 106. It should be noted that if 401 and 402 are not performed, 403 may be the PDU session modification procedure initiated by the PCF 107.

S405 to S407: The SMF 106 may generate configuration information, where the configuration information is used to enable the UPF 103 to report the time information used for synchronous transmission of the first data flow and the second data flow, and the SMF 106 sends the configuration information to the UPF 103.

In an implementation, the SMF 106 may generate a corresponding QoS rule (a QoS parameter sent to the side of the UE), a QoS profile (a QoS parameter sent to the side of the RAN), and the configuration information (for example, an N4 rule, and a QoS parameter sent to the side of the UPF) based on information such as the QoS parameter from the side of the PCF 107, and separately send the corresponding QoS rule, the QoS profile, and the configuration information to the UE 101, the RAN 102, and the side of the UPF 103, to deliver the QoS parameters, where the QoS parameters include a plurality of different QoS parameters corresponding to different QoS flows. Optionally, in a process of sending the N4 rule to the UPF 103, the foregoing configuration information is further carried, to indicate the UPF 103 to measure and report time information of one or more specified data flows; and a reported trigger condition, for example, periodic triggering or triggering and reporting performed based on time difference thresholds of arrival of data flows, may be carried, and reference data flow information, for example, a QoS flow identifier or data flow description information corresponding to the data flow, may be further included. The UPF 103 may collect statistics on and report a transmission time from sending of a data packet of a data flow by a side of the application server to arrival of the data packet at the UPF 103. Optionally or additionally, an association identifier may be added to the N4 rule, to indicate that the plurality of data flows are associated or that synchronization assurance needs to be performed for the plurality of data flows. The UPF 103 computes a transmission time difference between the data flows based on statistics on arrival of the data packets on the side of the UPF, and reports the transmission time difference.

S408: Complete a remaining PDU session establishment or modification procedure.

S408: The UPF 103 determines the time information used for synchronous transmission of the first data flow and the second data flow. For example, the UPF 103 may determine first transmission time from sending of the first data flow by the application server to arrival of the first data flow at the UPF 103. In some embodiments, the time information used for synchronous transmission of the first data flow and the second data flow may include the first transmission time. Optionally, the time information may include second transmission time from sending of the second data flow by the application server or another application server to arrival of the second data flow at the UPF 103. The second transmission time may be determined by the UPF 103 based on second arrival time at which a data packet of the second data flow arrives at the UPF 103 and a second timestamp in the data packet. Timestamp information in the data packet may be, for example, timestamp information in an RTP protocol header. Optionally, the configuration information includes an association identifier indicating that the first data flow is associated with the second data flow, the UPF 103 may determine, based on the association identifier, a transmission time difference between the first transmission time and the second transmission time, and the time information may include the transmission time difference. Optionally, the configuration information further includes an identifier of a reference data flow, that is, the transmission time difference is a difference between time of another data flow and time of the reference data flow. For example, if the identifier of the reference data flow indicates the first data flow, the transmission time difference is a difference between time of another data flow and time of the first data flow. Optionally, the time information further includes an identifier of a reference data flow, that is, the reported time information includes the transmission time difference and the identifier of the reference data flow. Optionally, the configuration information includes information about a clock difference between the first data flow and the second data flow, and the UPF 103 further determines the transmission time difference based on the information about the clock difference. For example, clocks of the first data flow and the second data flow may be different, that is, clocks on which timestamps in the data packets of the first data flow and the second data flow are based may be asynchronous; and the UPF 103 determines arrival time of the data packet of the first data flow and arrival time of the data packet of the second data flow based on a clock on a side of the UPF 103. Therefore, when determining the transmission time difference, the UPF 103 may further compute a clock difference between the first data flow and the second data flow.

In an implementation, the UPF 103 may monitor a case in which the data packet of the data flow arrives at the UPF, monitor timestamp (timestamp information carried in an RTP header, usually representing time at which the data packet is generated, which may be approximately represented as time at which the data packet is sent) of the corresponding data packet and arrival time at which the data packet arrives at the UPF, compute a transmission time from sending of the corresponding data packet by a side of the application server to arrival of the corresponding data packet at the UPF 103, and correspondingly collect statistics on a transmission time difference between the data flows. Optionally, the UPF 103 may only monitor and compute a transmission time from sending of a data packet of the data flow by the side of the application server to arrival of the data packet of the data flow at the UPF 103, and does not need to compute the transmission time difference between the data flows.

S410 to S411: The configuration information may further include a trigger condition, and the trigger condition indicates a threshold for the UPF 103 to send the transmission time difference, or indicates the UPF 103 to periodically send the transmission time difference.

In an implementation, the UPF 103 may report the time information to the SMF 106 periodically or based on the configuration information (for example, measured and reported configuration information in the N4 rule) or based on whether the transmission time difference between the data flows reaches the threshold.

S412: The SMF 106 correspondingly sends the time information reported by the side of the UPF 103 to the side of the PCF 107.

S413: The PCF 107 performs transmission scheduling on at least one of the first data flow and the second data flow based on the time information. In some embodiments, the time information includes the transmission time difference between the first transmission time of the first data flow and the second transmission time of the second data flow. In some embodiments, the time information includes the first transmission time of the first data flow and/or the second transmission time of the second data flow, and the PCF 107 may determine the transmission time difference based on the association identifier, the first transmission time, and the second transmission time. Alternatively or additionally, the PCF 107 further determines the transmission time difference based on information about a clock difference between the first data flow and the second data flow. Optionally, the PCF 107 performs transmission scheduling based on the transmission time of the first data flow and/or the second data flow and an end-to-end transmission delay requirement. In some embodiments, the PCF 107 may perform transmission scheduling by configuring a packet delay budget of at least one of the first data flow and the second data flow.

In an implementation, the PCF 107 performs QoS policy adjustment on the data flow based on the time information. The time difference between the plurality of data flows may be reported by the side of the UPF/SMF, or the transmission time difference between the plurality of data flows may be determined based on the transmission time of the data flow reported by the side of the UPF/SMF.

S414: The PCF 107 correspondingly initiates the PDU session modification procedure, and delivers and applies an updated QoS policy to one or more current data flows.

According to the foregoing embodiment described with reference to FIG. 4A and FIG. 4B, a plurality of data flows with a synchronization requirement can perform corresponding QoS policy adjustment based on a case in which the data flows arrive at the side of the UPF, to ensure end-to-end data flow synchronous transmission. Specifically, a transmission time difference between different data flows when the plurality of data flows arrive at the UPF, namely, a transmission time difference between different data flows in N6, may be determined based on a transmission time required for a data packet of each data flow to arrive at the side of the UPF, and the obtained time information is used as an important reference for QoS policy adjustment, to ensure accuracy of end-to-end synchronization between the plurality of data flows, and ensure user service experience.

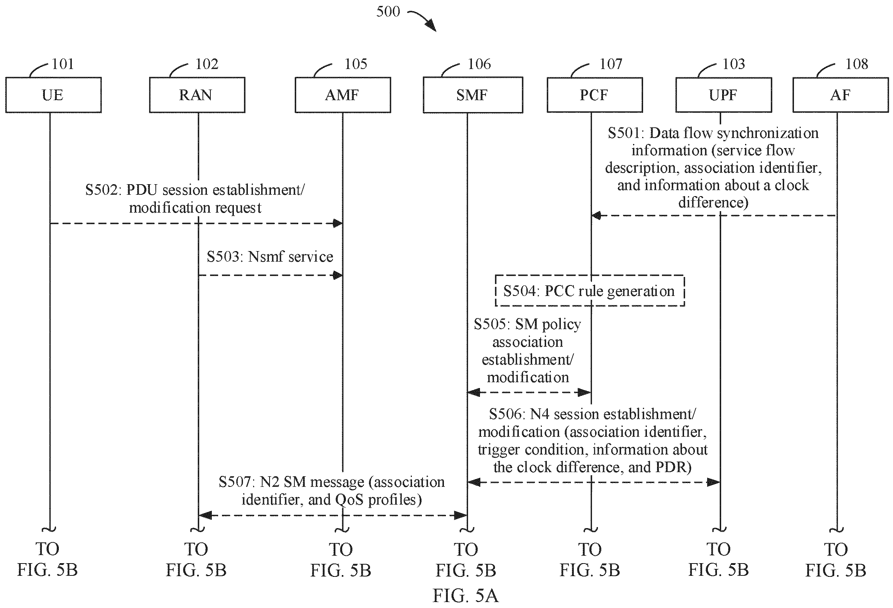

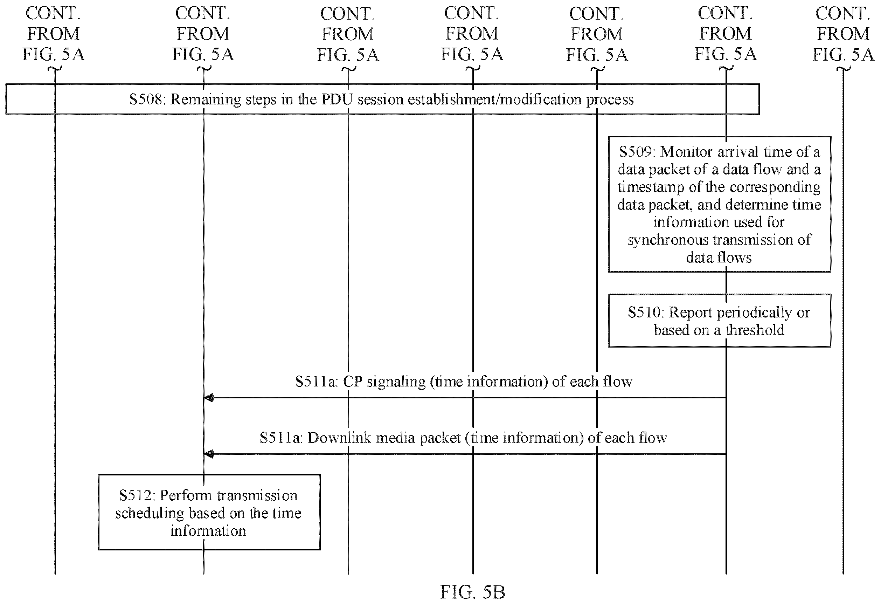

FIG. 5A and FIG. 5B are a schematic flowchart of a communication process 500 according to some embodiments of the present disclosure. The communication process 500 may be an example implementation of the communication process 300. A UE 101, a RAN 102, a UPF 103, an AMF 105, an SMF 106, a PCF 107, and an AF 138 may be involved in the communication process 500. Although only one network element is shown in FIG. 5A and FIG. 5B, during implementation, any appropriate quantity of network elements may be included based on a scale and an architecture of a network, for example, a plurality of UPFs 103 may be included, and data flows are sent by a same or different ASs and received by one or more UPFs 103. In the communication process 500, the UPF 103 sends time information used for synchronous transmission of data flows to a side of the RAN 102, and the side of the RAN 102 dynamically ensures synchronous transmission of a plurality of data flows when performing air interface resource scheduling. The communication process 500 includes the following steps.

S501: Optionally, the AF 108 may send data flow synchronization information of a corresponding service data flow to the PCF 107 through an N33 interface (through an NEF) or an N5 interface. Specifically, the AF 108 may send an AF request (AF Request) message to the PCF 107, where the AF request message carries SDF flow description information of the service, for example, an IP quintuple, an application ID (where the application ID corresponds to the service and may be used for data flow detection), and data flow synchronization information, and may specifically include information such as a clock difference between a plurality of flows, and optionally, the data flow synchronization information may further include an end-to-end delay requirement, namely, a transmission delay requirement from an application server to a side of the UE. For example, when the AF is deployed in an untrusted area, the AF 108 may invoke an Nnef_AFSessionWithQoS service on a side of the NEF, that is, interact with the PCF through the NEF; or when the AF is in a trusted area, the AF directly invokes an Npcf_PolicyAuthorize service on a side of the PCF.

S502: Due to a reason such as starting of a corresponding service, the UE 101 may initiate a PDU session establishment or modification procedure, to carry the corresponding service. It should be noted that this step is optional. After a media service is started, there may be an existing PDU session and a QoS flow that can meet a requirement such as QoS of the media service, and directly carry the corresponding service.

S503: The AMF 105 receives a PDU session establishment or modification message from the side of the UE 101, and sends a session establishment/management request in the PDU session establishment or modification message to a side of the SMF 106, for example, may send corresponding content to the SMF 106 by using an Nsmf_PDUSession_CreateSMContext/ UpdateSMContext service.

S504: The PCF 107 may determine a data flow monitoring policy (placed in a PCC rule) for a plurality of data flows based on the data flow synchronization information from the side of the AF 108, to monitor and report, to the side of the RAN 102, time statuses of the plurality of data flows arriving at a 5GS, namely, time information for sending of a data packet of each data flow by the application server to arrival of the data packet of each data flow at the 5GS (UPF), to ensure that the RAN 102 can subsequently perform corresponding dynamic air interface resource scheduling based on time statuses of different data flows arriving at a network side. Then, the PCF 107 sends the corresponding PCC rule to the side of the SMF. Specifically, in a session management policy association establishment or modification procedure initiated by the SMF 106, the PCF 107 sends a corresponding QoS parameter to the side of the SMF 106 by using the PCC rule. Optionally, the PCF 107 may further place the clock difference between the data flows into the foregoing policy. It should be noted that if 501 and 502 are not performed, 403 may be the PDU session modification procedure initiated by the PCF 107.

S505 to S507: The SMF 106 may generate first configuration information, where the first configuration information is used to enable (for example, indicate or trigger) the UPF 103 to report time information used for synchronous transmission of a first data flow and a second data flow, and the SMF 106 sends the configuration information to the UPF 103. For example, the UPF reports the time information to the side of the RAN 102 by using downlink data. The SMF 106 may further generate second configuration information, where the second configuration information indicates the RAN 102 to perform transmission scheduling on the first data flow and the second data flow, and the SMF 106 sends the second configuration information to the RAN 102.

In an implementation, the SMF 106 may generate a corresponding QoS rule (a QoS parameter sent to the side of the UE), the second configuration information (for example, a QoS profile and a QoS parameter sent to the side of the RAN), and the first configuration information (for example, an N4 rule, and a QoS parameter sent to the side of the UPF) based on information such as the QoS parameter from the side of the PCF 107, and separately send the corresponding QoS rule, the second configuration information, and the first configuration information to the UE 101, the RAN 102, and the side of the UPF 103, to deliver the QoS parameters, where the QoS parameters include a plurality of different QoS parameters corresponding to different QoS flows.

Optionally, in a process of sending the QoS profile to the RAN 102, indication information is added to the QoS profile, to indicate the RAN 102 to perform dynamic transmission resource scheduling on the corresponding data packet based on the time information carried in the data packet. For example, the time information includes first transmission time from sending of the first data flow by the side of the application server to arrival of the first data flow at the UPF 103, and second transmission time from sending of the second data flow by a side of a same or another application server to arrival of the second data flow at the UPF 103 or another UPF. In this case, an association identifier is added to the QoS profile corresponding to the associated first data flow and/or the associated second data flow, and the side of the RAN 102 may compute, based on the association identifier, compute a transmission time difference between transmission time of the data flows for transmission time of a data packet carried at a GTP-U layer of a downlink data packet of the associated data flow, and perform dynamic transmission resource scheduling on the corresponding data packet of at least one of the first data flow and the second data flow based on the transmission time difference. Optionally, information about a clock difference between the data flows is further carried, to indicate the RAN 102 to consider the information about the clock difference when computing the transmission time difference between the data flows. Optionally or additionally, the time information includes the transmission time difference between the first transmission time of the first data flow and the second transmission time of the second data flow. The time difference may be carried in one or more data packets (for example, a GTP-U layer of the data packet) of at least one of the first data flow and the second data flow. The RAN 102 may perform dynamic transmission resource scheduling on the corresponding data packet of at least one of the first data flow and the second data flow based on the transmission time difference. Optionally, an identifier of a reference data flow is added to the QoS profile, and the identifier of the reference data flow indicates that the transmission time difference is time difference between another data flow and the reference data flow. For example, if the identifier of the reference data flow indicates the first data flow, the transmission time difference is the difference between the time of the another data flow and the time of the first data flow. In this case, the reported time information includes the transmission time difference and the identifier of the reference data flow, and the RAN 102 may perform dynamic transmission resource scheduling on the corresponding data packet of at least one of the first data flow and the second data flow based on the transmission time difference and the identifier of the reference data flow. Optionally, a data packet of the reference data flow may carry a transmission time difference of 0 or may not carry transmission time information, and the RAN 102 may determine the reference data flow based on information carried in the data packet of the data flow. Optionally or additionally, the time information includes RTP timestamp information carried in the data packet of the data flow, and the RTP timestamp information indicates a sending time at which the data packet of the data flow is sent or generated by the application server. Specifically, the time information includes first sending time at which the data packet of the first data flow is sent or generated by the application server, and the RAN 102 obtains the first sending time from one or more data packets (for example, a GTP-U layer of the data packet) of the first data flow, and correspondingly determines third transmission time from sending of the data packet of the first data flow by the application server to receiving of the data packet of the first data flow by the RAN 102; and the time information further includes second sending time at which the data packet of the second data flow is sent or generated by the application server, and the RAN 102 obtains the second sending time from one or more data packets (for example, a GTP-U layer of the data packet) of the second data flow, and correspondingly determines fourth transmission time from sending of the data packet of the second data flow by the application server to receiving of the data packet of the second data flow by the RAN 102. In this case, an association identifier is added to the QoS profile corresponding to the associated first data flow and/or second data flow, and the RAN 102 may determine a transmission time difference between the third transmission time and the fourth transmission time based on the association identifier. Optionally, the QoS profile further carries information about a clock difference between the data flows, to indicate the RAN 102 to consider the information about the clock difference when computing the transmission time difference.

Optionally, in a process of sending an N4 rule to the UPF 103, measured and reported configuration information is further carried, to indicate the UPF 103 to measure arrival time of several specified data flows, add the time information to one or more downlink data packets, and send the one or more downlink data packets to the side of the RAN 102. For example, the time information includes the first transmission time from sending of the first data flow by the side of the application server to arrival of the first data flow at the UPF 103, and the UPF 103 may add the first transmission time to the GTP-U layer of the data packet of the first data flow and send the data packet to the side of the RAN 102. Optionally, the time information further includes the second transmission time from sending of the second data flow by a side of a same or another application server to arrival of the second data flow at the UPF 103, and the UPF 103 may add the second transmission time to the GTP-U layer of the data packet of the second data flow and send the data packet to the side of the RAN 102. Optionally or additionally, the N4 rule further includes an association identifier, indicating that a plurality of data flows corresponding to the UPF 103 are associated with each other, and multi-flow synchronization processing needs to be performed on the plurality of data flows. In this case, the UPF 103 computes a transmission time difference between transmission time of the data flows based on statistics of the data packet transmission time, and reports the transmission time difference. Optionally, information about a clock difference between the data flows is further carried, to indicate the UPF 103 to consider the information about the clock difference when computing the transmission time difference between the data flows. Optionally, an identifier of a reference data flow may be further added to the N4 rule, and the identifier of the reference data flow indicates that the transmission time difference is a difference between time of another data flow and time of the reference data flow. For example, if the identifier of the reference data flow indicates the first data flow, the transmission time difference is the difference between the time of the another data flow and the time of the first data flow. In this case, the reported time information includes the transmission time difference and the identifier of the reference data flow. Optionally, a data packet of the reference data flow may carry a transmission time difference of 0 or may not carry transmission time information, and the RAN 102 may determine the reference data flow based on information carried in the data packet of the reference data flow. Optionally or additionally, the time information includes RTP timestamp information carried in the data packet of the data flow, and the RTP timestamp information indicates a sending time at which the data packet of the data flow is sent or generated by the application server. Specifically, the UPF 103 may add, to the downlink data packet for reporting, timestamp information of a data packet, of each data flow, sent by the side of the application server (for example, timestamp information carried in the data packet).

S508: Complete a remaining PDU session establishment or modification procedure.

S509: The UPF 103 determines the time information used for synchronous transmission of the first data flow and the second data flow, where the time information may include any time information in the time information example described with reference to the N4 rule sent to the UPF 103. For example, the UPF 103 may determine the first transmission time from sending of the first data flow by the application server to arrival of the first data flow at the UPF 103. In some embodiments, the time information used for synchronous transmission of the first data flow and the second data flow may include the first transmission time. Optionally or additionally, the time information may include the second transmission time from sending of the second data flow by the application server or another application server to arrival of the second data flow at the UPF 103. The second transmission time may be determined by the UPF 103 based on second arrival time at which the data packet of the second data flow arrives at the UPF 103 and a second timestamp in the data packet. The UPF sends the first transmission time and/or the second transmission time as the time information to the side of the RAN 102.

Optionally or additionally, the configuration information includes an association identifier indicating that the first data flow is associated with the second data flow, the UPF 103 may determine, based on the association identifier, a transmission time difference between the first transmission time and the second transmission time, and the time information may include the transmission time difference. Alternatively or additionally, the configuration information further includes identification information of a reference data flow, identifying the reference data flow in time difference computing, that is, the time difference is a difference between another data flow and the reference data flow. Alternatively or additionally, the configuration information includes information about a clock difference between the first data flow and the second data flow, and the UPF 103 further determines the transmission time difference based on the information about the clock difference. For example, clocks of the first data flow and the second data flow may be different, that is, clocks on which timestamps in the data packets of the first data flow and the second data flow are based may be asynchronous; and the UPF 103 determines arrival time of the data packet of the first data flow and arrival time of the data packet of the second data flow based on a clock on a side of the UPF 103. Therefore, when determining the transmission time difference, the UPF 103 may further compute a clock difference between the first data flow and the second data flow.

In an implementation, the UPF 103 determines that the time information used for synchronous transmission of the first data flow and the second data flow is time at which the first data flow and/or the second data flow are/is sent by the application server. For example, the UPF 103 may monitor timestamp information (for example, timestamp information carried in an RTP header, usually representing time at which the data packet is generated, which may be approximately represented as time at which the data packet is sent) of the data packet of the data flow, and send the timestamp information as the time information to the side of the RAN 102.

In an implementation, the UPF 103 may monitor a case in which the data packet of the data flow arrives at the UPF, monitor timestamp information (for example, timestamp information carried in an RTP header, usually representing time at which the data packet is generated, which may be approximately represented as time at which the data packet is sent) of the corresponding data packet and arrival time at which the data packet arrives at the UPF, compute a transmission time from sending of the corresponding data packet by a side of the application server to arrival of the corresponding data packet at the UPF 103, and correspondingly collect statistics on a transmission time difference between the data flows. Optionally, the UPF 103 may only monitor and compute a transmission time from sending of a data packet of the data flow by the side of the application server to arrival of the data packet of the data flow at the UPF 103, and does not need to compute the transmission time difference between the data flows.

In an implementation, the UPF 103 adds the time information to a GTP-U layer of a downlink data packet and sends the downlink data packet to the side of the RAN 102. Specifically, the time information may be sent in one or more downlink data packets.

S510 to S511b: The configuration information may further include a trigger condition, and the trigger condition indicates a threshold for the UPF 103 to send the transmission time difference, or indicates the UPF 103 to periodically send the transmission time difference. In some embodiments, the UPF 103 adds the transmission time difference to a data packet of at least one of the first data flow and the second data flow, to send the transmission time difference to the RAN 102. In some embodiments, the UPF 103 may add the first transmission time of the first data flow to the data packet of the first data flow. Alternatively or additionally, the UPF 103 may add the second transmission time of the second data flow to the data packet of the second data flow. In some embodiments, the UPF 103 may add, to the data packet of the first data flow and/or the second data flow, the time at which the data packet of the first data flow and/or the data packet of the second data flow are/is sent by the application server, and send the data packet to the side of the RAN 102.

In an implementation, the UPF 103 may add the measured time information (a transmission time from sending of a data packet of each data flow by the side of the server to arrival of the data packet of each data flow at the UPF, a transmission time difference between data flows, or time at which the data packet of the data flow is sent by the application server) to a GTP-U layer of a downlink data packet based on the measured and reported configuration information in the N4 rule, and send the downlink data packet to the side of the RAN 102. The UPF 103 may send the time information to the side of the RAN 102 by using control plane (Control Plane, CP) signaling and/or a downlink media flow.

S512: The RAN 102 performs transmission scheduling on at least one of the first data flow and the second data flow based on the time information. In some embodiments, the RAN 102 may configure a packet delay budget of at least one of the first data flow and the second data flow based on the transmission time difference, so that the first data flow and the second data flow synchronously arrive at the UE 101.

In an implementation, the RAN 102 may determine, based on time information carried in a data packet of each data flow, a transmission time difference between the data flows, to perform dynamic transmission resource scheduling on the plurality of data flows. The transmission time difference between the plurality of data flows may be information added by the side of the UPF 103 to the GTP-U layer of the downlink data packet, or may be a transmission time difference between the plurality of data flows that is determined based on transmission time, from sending of data packets of the plurality of data flows by the side of the application server to arrival of the data packets of the plurality of data flows at the UPF 103, that is added by the side of the UPF 103, or may be a transmission time difference between the plurality of data flows that is determined based on time at which data packets of the plurality of data flows are sent by the side of the application server and time at which the data packets arrive at the side of the RAN 102 that are added by the side of the UPF 103. Optionally, information about a clock difference between the data flows may be further considered when the transmission time difference is determined.

According to the foregoing embodiment described with reference to FIG. 5A and FIG. 5B, a plurality of data flows with a synchronization requirement can perform corresponding QoS policy adjustment based on a case in which the data flows arrive at the side of the UPF, to ensure end-to-end data flow synchronous transmission. Specifically, a transmission time difference between different data flows when the plurality of data flows arrive at the UPF, namely, a transmission time difference between different data flows in N6, may be determined based on a transmission time required for a data packet of each data flow to arrive at the side of the UPF. The UPF sends the obtained time information to the side of the RAN by using the GTP-U layer of the downlink data packet. When performing air interface resource scheduling, the side of the RAN dynamically ensures synchronization between the plurality of data flows, to ensure user service experience.

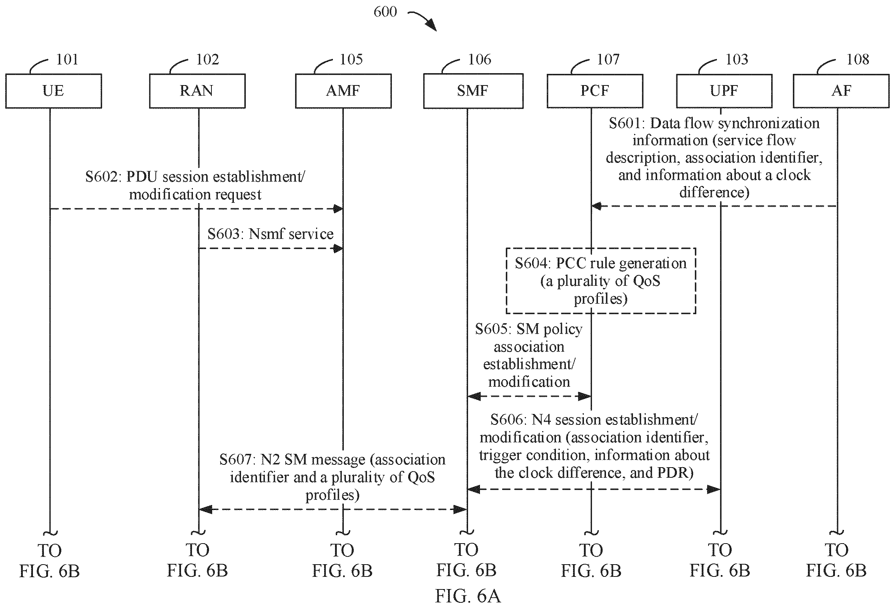

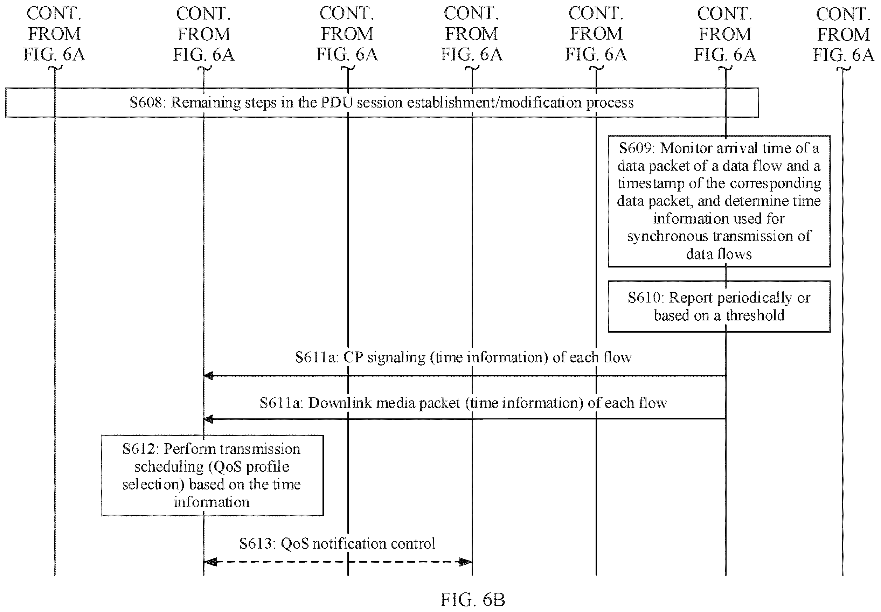

FIG. 6A and FIG. 6B are a schematic flowchart of a communication process 600 according to some embodiments of the present disclosure. The communication process 600 may be an example implementation of the communication process 300. A UE 101, a RAN 102, a UPF 103, an AMF 105, an SMF 106, a PCF 107, and an AF 138 may be involved in the communication process 600. Although only one network element is shown in FIG. 6A and FIG. 6B, during implementation, any appropriate quantity of network elements may be included based on a scale and an architecture of a network, for example, a plurality of UPFs 103 may be included, and data flows are sent by a same or different ASs and received by one or more UPFs 103. In the communication process 600, a plurality of levels of QoS profiles are configured in the RAN 102 in advance. After determining a transmission time difference between data flows based on time information carried at a GTP-U layer of a downlink data packet, the RAN 102 selects a corresponding appropriate QoS profile for the data flow, and notifies a core network of the QoS profile, to trigger a PDU session modification procedure. The communication process 600 includes the following steps.

S601: Optionally, the AF 108 may send data flow synchronization information of a corresponding service data flow to the PCF 107 through an N33 interface (through an NEF) or an N5 interface. Specifically, the AF 108 may send an AF request (AF Request) message to the PCF 107, where the AF request message carries SDF flow description information of the service, for example, an IP quintuple, an application ID (where the application ID corresponds to the service and may be used for data flow detection), and the data flow synchronization information, and may specifically include information such as a clock difference between a plurality of flows. For example, when the AF is deployed in an untrusted area, the AF 108 may invoke an Nnef_AFSessionWithQoS service on a side of the NEF, that is, interact with the PCF through the NEF; or when the AF is in a trusted area, the AF directly invokes an Npcf_PolicyAuthorize service on a side of the PCF.

S602: Due to a reason such as starting of a corresponding service, the UE 101 may initiate a PDU session establishment or modification procedure, to carry the corresponding service. It should be noted that this step is optional. After a media service is started, there may be an existing PDU session and a QoS flow that can meet a requirement such as QoS of the media service, and directly carry the corresponding service.

S603: The AMF 105 receives a PDU session establishment or modification message from the side of the UE 101, and sends a session establishment/management request in the PDU session establishment or modification message to a side of the SMF 106, for example, may send corresponding content to the SMF 106 by using an Nsmf_PDUSession_CreateSMContext/ UpdateSMContext service.

S604: The PCF 107 may determine a data flow monitoring policy (placed in a PCC rule) for a plurality of data flows based on the data flow synchronization information from the side of the AF 108, to monitor and report, to the side of the RAN 102, time statuses of the plurality of data flows arriving at a 5GS, to ensure that the RAN 102 can subsequently perform corresponding dynamic air interface resource scheduling based on time statuses of different data flows arriving at a network side. Then, the PCF 107 sends the corresponding PCC rule to the side of the SMF. Specifically, in a session management policy association establishment or modification procedure initiated by the SMF 106, the PCF 107 sends a corresponding QoS parameter to the side of the SMF 106 by using the PCC rule. Optionally, the PCF 107 may further place the clock difference between the data flows into the foregoing policy.

In some embodiments, the PCF 107 may generate a plurality of quality of service configurations with different packet delay budgets based on the data flow synchronization information. For example, the PCF 107 generates a plurality of QoS profiles (for example, a plurality of levels of QoS parameters) for each data flow, to adapt to a range of out-of-synchronization between a plurality of data flows of different levels. It should be noted that if 601 and 602 are not performed, 403 may be the PDU session modification procedure initiated by the PCF 107.

S605 to S607: The SMF 106 may generate first configuration information, where the first configuration information is used to enable the UPF 103 to report time information used for synchronous transmission of a first data flow and a second data flow, and the SMF 106 sends the configuration information to the UPF 103. For example, the UPF reports the time information to the side of the RAN 102 by using a downlink data packet. The SMF 106 may further generate second configuration information, where the second configuration information indicates the RAN 102 to perform transmission scheduling on the first data flow and the second data flow, and the SMF 106 sends the second configuration information to the RAN 102.

In an implementation, the SMF 106 may generate a corresponding QoS rule (a QoS parameter sent to the side of the UE), the second configuration information (for example, a QoS profile and a QoS parameter sent to the side of the RAN), and the first configuration information (for example, an N4 rule, and a QoS parameter sent to the side of the UPF) based on information such as the QoS parameter from the side of the PCF 107, and separately send the corresponding QoS rule, the second configuration information, and the first configuration information to the UE 101, the RAN 102, and the side of the UPF 103, to deliver the QoS parameters, where the QoS parameters include a plurality of different QoS parameters corresponding to different QoS flows.

Optionally, in a process of sending the QoS profile to the RAN 102, a plurality of levels of QoS profiles are sent for each data flow. Optionally, the plurality of data flows share the plurality of levels of QoS profiles. Optionally, indication information is added to the QoS profile, to indicate the RAN 102 to perform corresponding selection on the plurality of levels of QoS profiles based on the time information carried in the data packet. Alternatively, an association identifier is added to the QoS profile, and the side of the RAN 102 may perform, based on the association identifier, corresponding selection on the plurality of levels of QoS profiles for the time information that is carried at a GTP-U layer of a downlink data packet of a plurality of associated data flows and that is used for synchronous transmission of the first data flow and the second data flow. Optionally, information about a clock difference between data flows is further carried, to indicate the RAN 102 to consider the information about the clock difference when the RAN 102 performs selection on the plurality of levels of QoS profiles. Optionally, the RAN 102 side determines a transmission time difference between the plurality of data flows based on the time information, and performs selection on the plurality of levels of QoS profiles based on the transmission time difference.

Optionally, in a process of sending an N4 rule to the UPF 103, measured and reported configuration information is further carried, to indicate the UPF 103 to measure arrival time of several specified data flows, add the time information to one or more downlink data packets, and send the one or more downlink data packets to the side of the RAN 102. For example, the time information includes the first transmission time from sending of the first data flow by the side of the application server to arrival of the first data flow at the UPF 103, and the UPF 103 may add the first transmission time to the GTP-U layer of the data packet of the first data flow and send the data packet to the side of the RAN 102. Optionally, the time information further includes the second transmission time from sending of the second data flow by a side of a same or another application server to arrival of the second data flow at the UPF 103, and the UPF 103 may add the second transmission time to the GTP-U layer of the data packet of the second data flow and send the data packet to the side of the RAN 102. Optionally or additionally, the N4 rule further includes an association identifier, indicating that a plurality of data flows corresponding to the UPF 103 are associated with each other, and multi-flow synchronization processing needs to be performed on the plurality of data flows. In this case, the UPF 103 computes a transmission time difference between transmission time of the data flows based on statistics of the data packet transmission time, and reports the transmission time difference. Optionally, information about a clock difference between the data flows is further carried, to indicate the UPF 103 to consider the information about the clock difference when computing the transmission time difference between the data flows. Optionally, an identifier of a reference data flow may be further added to the N4 rule, and the identifier of the reference data flow indicates that the transmission time difference is a difference between time of another data flow and time of the reference data flow. For example, if the identifier of the reference data flow indicates the first data flow, the transmission time difference is the difference between the time of the another data flow and the time of the first data flow. In this case, the reported time information includes the transmission time difference and the identifier of the reference data flow. Optionally, a data packet of the reference data flow may carry a transmission time difference of 0 or may not carry transmission time information, and the RAN 102 may determine the reference data flow based on information carried in the data packet of the reference data flow. Optionally or additionally, the time information includes RTP timestamp information carried in the data packet of the data flow, and the RTP timestamp information indicates a sending time at which the data packet of the data flow is sent or generated by the application server. Specifically, the UPF 103 may add, to the downlink data packet for reporting, timestamp information of a data packet, of each data flow, sent by the side of the application server (for example, timestamp information carried in the data packet).

S608: Complete a remaining PDU session establishment or modification procedure.

S609: The UPF 103 determines the time information used for synchronous transmission of the first data flow and the second data flow. For example, the UPF 103 may determine first transmission time from sending of the first data flow by the application server to arrival of the first data flow at the UPF 103. In some embodiments, the time information used for synchronous transmission of the first data flow and the second data flow may include the first transmission time. Optionally or additionally, the time information may include the second transmission time from sending of the second data flow by the application server or another application server to arrival of the second data flow at the UPF 103. The second transmission time may be determined by the UPF 103 based on second arrival time at which the data packet of the second data flow arrives at the UPF 103 and a second timestamp in the data packet. The UPF sends the first transmission time and/or the second transmission time as the time information to the side of the RAN 102.

Optionally or additionally, the configuration information includes an association identifier indicating that the first data flow is associated with the second data flow, the UPF 103 may determine, based on the association identifier, a transmission time difference between the first transmission time and the second transmission time, and the time information may include the transmission time difference. Alternatively or additionally, the configuration information further includes identification information of a reference data flow, identifying the reference data flow in time difference computing, that is, the time difference is a difference between another data flow and the reference data flow. Alternatively or additionally, the configuration information includes information about a clock difference between the first data flow and the second data flow, and the UPF 103 further determines the transmission time difference based on the information about the clock difference. For example, clocks of the first data flow and the second data flow may be different, that is, clocks on which timestamps in the data packets of the first data flow and the second data flow are based may be asynchronous; and the UPF 103 determines arrival time of the data packet of the first data flow and arrival time of the data packet of the second data flow based on a clock on a side of the UPF 103. Therefore, when determining the transmission time difference, the UPF 103 may further compute a clock difference between the first data flow and the second data flow.

In an implementation, the UPF 103 determines that the time information used for synchronous transmission of the first data flow and the second data flow is time at which the first data flow and/or the second data flow are/is sent by the application server. For example, the UPF 103 may monitor timestamp information (for example, timestamp information carried in an RTP header, usually representing time at which the data packet is generated, which may be approximately represented as time at which the data packet is sent) of the data packet of the data flow, and send the timestamp information as the time information to the side of the RAN 102.

In an implementation, the UPF 103 may monitor a case in which the data packet of the data flow arrives at the UPF, monitor timestamp (for example, timestamp information carried in an RTP header, usually representing time at which the data packet is generated, which may be approximately represented as time at which the data packet is sent) of the corresponding data packet and arrival time at which the data packet arrives at the UPF, compute a transmission time from sending of the corresponding data packet by a side of the application server to arrival of the corresponding data packet at the UPF 103, and correspondingly collect statistics on a transmission time difference between the data flows. Optionally, the UPF 103 may only monitor and compute a transmission time from sending of a data packet of the data flow by the side of the application server to arrival of the data packet of the data flow at the UPF 103, and does not need to compute the transmission time difference between the data flows.

In an implementation, the UPF 103 adds the time information to a GTP-U layer of a downlink data packet and sends the downlink data packet to the side of the RAN 102. Specifically, the time information may be sent in one or more downlink data packets.

S610 to S611b: The configuration information may further include a trigger condition, and the trigger condition indicates a threshold for the UPF 103 to send the transmission time difference, or indicates the UPF 103 to periodically send the transmission time difference. In some embodiments, the UPF 103 adds the transmission time difference to a data packet of at least one of the first data flow and the second data flow, to send the transmission time difference to the RAN 102. In some embodiments, the UPF 103 may add the first transmission time of the first data flow to the data packet of the first data flow. Alternatively or additionally, the UPF 103 may add the second transmission time of the second data flow to the data packet of the second data flow.

In an implementation, the UPF 103 may add the measured time information (a transmission time from sending of a data packet of each data flow by the side of the server to arrival of the data packet of each data flow at the UPF, or a transmission time difference between data flows) to a GTP-U layer of a downlink data packet based on the measured and reported configuration information in the N4 rule, and send the downlink data packet to the side of the RAN 102. The UPF 103 may send the time information to the side of the RAN 102 by using control plane (Control Plane, CP) signaling and/or a downlink user plane.

S612: The RAN 102 performs transmission scheduling on at least one of the first data flow and the second data flow based on the time information. In some embodiments, the RAN 102 may select a quality of service configuration from a plurality of quality of service configurations for at least one of the first data flow and the second data flow based on the time information.

In an implementation, the RAN 102 may determine, based on time information carried in a data packet of each data flow, a transmission time difference between the data flows, to perform selection on the plurality of levels of QoS profiles. The transmission time difference between the plurality of data flows may be information added by the side of the UPF 103 to the GTP-U layer of the downlink data packet, or may be a transmission time difference between the plurality of data flows that is determined based on a transmission time, from sending of data packets of the plurality of data flows by the side of the application server to arrival of the data packets of the plurality of data flows at the UPF 103, that is added by the side of the UPF 103, or may be a transmission time difference between the plurality of data flows that is determined based on time at which data packets of the plurality of data flows are sent by the side of the application server and time at which these data packets arrive at the side of the RAN 102 that are added by the side of the UPF 103. Optionally, information about a clock difference between the data flows may be further considered when the transmission time difference is determined.

S613: The RAN notifies, based on a QoS profile selected for each flow, a side of the CN of a corresponding QoS profile change, that is, an original QoS parameter cannot meet a service requirement and what a new QoS parameter is.

According to the foregoing embodiment described with reference to FIG. 6A and FIG. 6B, a plurality of data flows with a synchronization requirement can perform corresponding QoS policy adjustment based on a case in which the data flows arrive at the side of the UPF, to ensure end-to-end data flow synchronous transmission. Specifically, a transmission time difference between different data flows when the plurality of data flows arrive at the UPF, namely, a transmission time difference between different data flows in N6, may be determined based on a transmission time required for a data packet of each data flow to arrive at the side of the UPF. The UPF sends the obtained time information to the side of the RAN by using the GTP-U layer of the downlink data packet, and the side of the RAN selects an appropriate QoS profile and notifies the side of the CN of the appropriate QoS profile to perform session modification, to dynamically ensure synchronization between the plurality of data flows, and ensure user service experience.

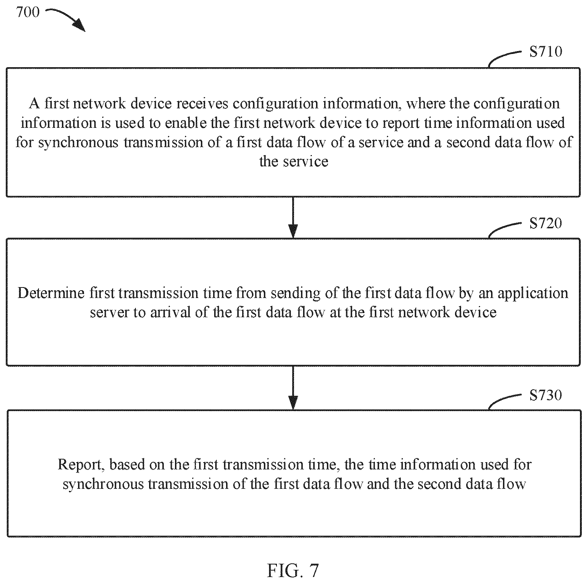

FIG. 7 is a flowchart of a communication process 700 performed at a first network device according to some embodiments of the present disclosure. For ease of understanding, FIG. 7 is described with reference to FIG. 2 and FIG. 4A and FIG. 4B to FIG. 6A and FIG. 6B. For example, the communication process 700 may be performed at the UPF (namely, the first network device) 103 shown in FIG. 2 and FIG. 4A and FIG. 4B to FIG. 6A and FIG. 6B. The communication process 700 includes the following steps.

S710: The first network device receives configuration information, where the configuration information is used to enable (for example, indicate or trigger) the first network device to report time information used for synchronous transmission of a first data flow of a service and a second data flow of the service. S720: The first network device determines first transmission time from sending of the first data flow by an application server to arrival of the first data flow at the first network device. S730: The first network device reports, based on the first transmission time, the time information used for synchronous transmission of the first data flow and the second data flow. It should be noted that the first data flow and the second data flow may be different data flows of a same user or may be different data flows of different users, and may be sent by a same application server or may be sent by different application servers.

In some embodiments, the first network device receives the configuration information from a session management network element. Specifically, the configuration information indicates the first network device to detect and report the time information used for synchronous transmission of the first data flow and the second data flow. Optionally, the configuration information further includes at least one of the following: a data packet detection rule used to detect the first data flow and/or the second data flow, a mechanism used to detect first transmission time from sending of the first data flow by the application server to arrival of the first data flow at a side of the first network device, an association identifier used to associate the first data flow with the second data flow, a trigger condition used to trigger the first network device to report the time information, and an identifier of a reference data flow.

In some embodiments, the configuration information further includes a mechanism for detecting the first transmission time from sending of the first data flow by the application server to arrival of the first data flow at the side of the first network device, that is, indicating the first network device to determine the first transmission time based on a timestamp carried in a downlink data packet and time at which the downlink data packet arrives at the side of the first network device.

In some embodiments, the first network device determines first arrival time at which a data packet of the first data flow arrives at the first network device and a first timestamp in the data packet; and determines the first transmission time based on the first arrival time and the first timestamp. In an implementation, the first network device determines the first transmission time through statistics collection based on timestamp information carried in the data packet of the first data flow and the time at which the data packet is received, where the first transmission time may be a statistical average value in a period of time. In some embodiments, the first network device sends the first transmission time to a second network device. For example, the first network device may send the first transmission time to the second network device through a session management function device. Alternatively, the first network device sends the first transmission time to a third network device.

In some embodiments, the first network device further determines second arrival time at which a data packet of the second data flow arrives at the first network device and a second timestamp in the data packet; and determines, based on the second arrival time and the second timestamp, second transmission time from sending of the second data flow by the application server or another application server to arrival of the second data flow at the first network device. In some embodiments, the first network device sends the second transmission time to the second network device. For example, the first network device may send the second transmission time to the second network device through the session management function device. Alternatively, the first network device sends the second transmission time to the third network device.

In some embodiments, the configuration information includes an association identifier indicating that the first data flow is associated with the second data flow, and the association identifier may also indicate that the first data flow and the second data flow need to be synchronously transmitted. In some embodiments, the first network device determines a transmission time difference between the first transmission time and the second transmission time based on the association identifier. In some embodiments, the first network device sends the transmission time difference to the second network device through the session management function device. For example, the first network device may send the transmission time difference to the second network device through the session management function device. Alternatively, the first network device sends the transmission time difference to the third network device. In some embodiments, the configuration information further includes information about a clock difference between the first data flow and the second data flow, and the first network device further determines the transmission time difference based on the information about the clock difference. In some embodiments, the configuration information further includes a trigger condition, and the trigger condition indicates a threshold for the first network device to send the transmission time difference, or indicates the first network device to periodically send the transmission time difference. In an implementation, the configuration information further includes identification information indicating the reference data flow, and the identification information may be specifically a QoS flow identifier, data flow description information, or the like corresponding to the reference data flow. The first network device determines a difference between transmission time of another data flow and transmission time of the reference data flow. For example, if an identifier of the reference data flow indicates the first data flow, the transmission time difference is a difference between time of the another data flow and time of the first data flow. In some embodiments, the time information further includes an identifier of a reference data flow, that is, the reported time information includes the transmission time difference and the identifier of the reference data flow.

In some embodiments, the first network device adds the first transmission time to the data packet (for example, a GTP-U layer of one or more data packets) of the first data flow, to send the first transmission time to the third network device. Alternatively or additionally, the first network device adds the second transmission time to the data packet (for example, a GTP-U layer of one or more data packets) of the second data flow, to send the second transmission time to the third network device. In some embodiments, the first network device adds the transmission time difference to a data packet (for example, a GTP-U layer of one or more data packets) of at least one of the first data flow and the second data flow, to send the transmission time difference to the third network device.

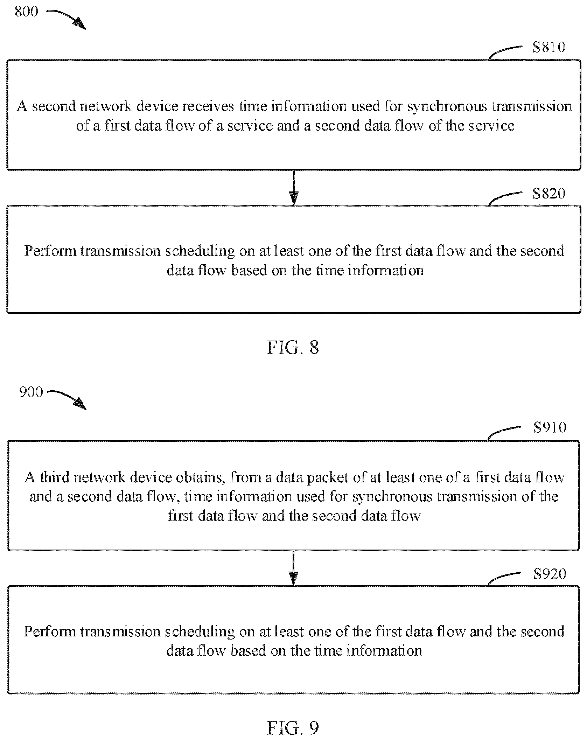

FIG. 8 is a flowchart of a communication process 800 performed at a second network device according to some embodiments of the present disclosure. For ease of understanding, FIG. 8 is described with reference to FIG. 3 and FIG. 4A and FIG. 4B to FIG. 6A and FIG. 6B. For example, the communication process 800 may be performed at the PCF (namely, the second network device) 107 shown in FIG. 4A and FIG. 4B to FIG. 6A and FIG. 6B. The communication process 800 may include the following steps.

S810: The second network device receives time information used for synchronous transmission of a first data flow of a service and a second data flow of the service. S820: The second network device performs transmission scheduling on at least one of the first data flow and the second data flow based on the time information. It should be noted that the first data flow and the second data flow may be different data flows of a same user or may be different data flows of different users, and may be sent by a same application server or may be sent by different application servers.

In some embodiments, the second network device further receives data flow synchronization information from an application function device, where the data flow synchronization information includes at least one of the following: description information of the first data flow and the second data flow; an association identifier, indicating that the first data flow is associated with the second data flow, where the association identifier may also indicate that the first data flow and the second data flow need to be synchronously transmitted; or a synchronization indication, indicating to perform transmission scheduling on the first data flow and the second data flow. In some embodiments, the second network device further generates, based on the data flow synchronization information, a data flow policy indicating to report the time information.

In some embodiments, the time information includes first transmission time from sending of the first data flow by the application server to arrival of the first data flow at a first network device. Alternatively or additionally, the time information further includes second transmission time from sending of the second data flow by the application server or another application server to arrival of the second data flow at the first network device or another first network device.

In some embodiments, the second network device further determines a transmission time difference between the first transmission time and the second transmission time. In some embodiments, the time information further includes the transmission time difference and an identifier of a reference data flow, and the identifier of the reference data flow may be specifically a QoS flow identifier, data flow description information, or the like corresponding to the reference data flow. The first network device determines a difference between transmission time of another data flow and transmission time of the reference data flow. For example, if the identifier of the reference data flow indicates the first data flow, the transmission time difference is a difference between time of the another data flow and time of the first data flow.

In some embodiments, the data flow synchronization information further includes information about a clock difference between the first data flow and the second data flow, and the second network device further determines the transmission time difference based on the information about the clock difference. In some embodiments, the data flow monitoring policy includes information about a clock difference between the first data flow and the second data flow.

In some embodiments, the time information includes the transmission time difference between the first transmission time of the first data flow and the second transmission time of the second data flow. In some embodiments, the data flow monitoring policy includes a trigger condition, and the trigger condition indicates a threshold for reporting the transmission time difference, or to periodically report the transmission time difference.

In some embodiments, the second network device configures a packet delay budget of at least one of the first data flow and the second data flow based on the time information. In some embodiments, the second network device further generates a plurality of quality of service configurations with different packet delay budgets based on the data flow synchronization information.

In some embodiments, the second network device determines the transmission time difference based on the first transmission time reported by the first network device and the second transmission time provided by another first network device, and performs QoS policy adjustment on the first data flow and/or the second data flow based on the transmission time difference.

In some embodiments, the second network device determines the transmission time difference based on the first transmission time and the second transmission time that are reported by the first network device, and performs QoS policy adjustment on the first data flow and/or the second data flow based on the transmission time difference.

In some embodiments, the second network device performs QoS policy adjustment on the first data flow and/or the second data flow based on the transmission time difference reported by the first network device.

In some embodiments, the second network device determines a relative transmission time difference between two data flows based on the time information and a clock difference between a plurality of data flows, and performs QoS policy adjustment on the first data flow and/or the second data flow.

In some embodiments, the second network device performs QoS policy adjustment on the first data flow and/or the second data flow based on the time information, for example, configures a packet delay budget of at least one of the first data flow and the second data flow.

In some embodiments, the second network device may further perform transmission scheduling based on the transmission time of the first data flow and/or the second data flow and an end-to-end transmission delay requirement. The end-to-end delay requirement indicates a transmission delay requirement from the application server to a side of a terminal device.

In some embodiments, the time information includes first sending time at which the data packet of the first data flow is sent or generated by the application server. The second network device obtains the first sending time, and correspondingly determines, based on the first sending time, third transmission time from sending of the data packet of the first data flow by the application server to receiving of the data packet of the first data flow by the second network device.

In some embodiments, the time information further includes second sending time at which the data packet of the second data flow is sent or generated by the application server. The second network device obtains the second sending time, and correspondingly determines, based on the second sending time, fourth transmission time from sending of the data packet of the second data flow by the application server to receiving of the data packet of the second data flow by the second network device.

In some embodiments, the configuration information includes an association identifier indicating that the first data flow is associated with the second data flow, and the association identifier may also indicate that the first data flow and the second data flow need to be synchronously transmitted. The second network device determines, based on the association identifier, a transmission time difference between the third transmission time and the fourth transmission time. In an implementation, the configuration information further includes the information about the clock difference between the first data flow and the second data flow, and the second network device further determines the transmission time difference based on the information about the clock difference. The second network device performs, based on the transmission time difference, QoS policy adjustment on the first data flow and/or the second data flow.

FIG. 9 is a flowchart of a communication process 900 performed at a third network device according to some embodiments of the present disclosure. For ease of understanding, FIG. 9 is described with reference to FIG. 3, FIG. 5A and FIG. 5B, and FIG. 6A and FIG. 6B. For example, the communication process 900 may be performed at the RAN (namely, the third network device) 102 shown in FIG. 3, FIG. 5A and FIG. 5B, and FIG. 6A and FIG. 6B. The communication process 900 may include the following steps.

S910: The third network device obtains, from a data packet of at least one of a first data flow of a service and a second data flow of the service, time information used for synchronous transmission of the first data flow and the second data flow. S920: The third network device performs transmission scheduling on at least one of the first data flow and the second data flow based on the time information. It should be noted that the first data flow and the second data flow may be different data flows of a same user or may be different data flows of different users, and may be sent by a same application server or may be sent by different application servers.

In some embodiments, the time information includes first transmission time from sending of the first data flow by the application server to arrival of the first data flow at a first network device, and the third network device obtains the first transmission time from one or more data packets (for example, a GTP-U layer of the data packet) of the first data flow. That the data flow is sent by the application server may indicate that the data packet of the data flow is sent by the application server. Specifically, the time at which the first data flow is sent by the application server may represent, based on timestamp information carried in the data packet of the first data flow, for example, RTP timestamp information, collection and generation time of a media unit (for example, a video frame, a video slice, an audio frame, and tactile information) corresponding to the data packet and/or the time may represent the time at which the data packet is sent by the application server.

In some embodiments, the time information further includes second transmission time from sending of the second data flow by the application server to arrival of the second data flow at the first network device or another first network device, and the second data flow may be sent by an application server that is the same as the first data flow or another application server. The third network device obtains the second transmission time from one or more data packets (for example, a GTP-U layer of the data packet) of the second data flow.

In some embodiments, the third network device further receives configuration information indicating the third network device to perform transmission scheduling. In some embodiments, the configuration information includes an association identifier indicating that the first data flow is associated with the second data flow, and the association identifier may also indicate that the first data flow and the second data flow need to be synchronously transmitted. In some embodiments, the third network device determines a transmission time difference between the first transmission time and the second transmission time based on the association identifier. In some embodiments, the configuration information further includes information about a clock difference between the first data flow and the second data flow, and the third network device further determines the transmission time difference based on the information about the clock difference.

In some embodiments, the third network device obtains the transmission time difference between the first transmission time of the first data flow and the second transmission time of the second data flow from a data packet (for example, a GTP-U layer of one or more data packets) of at least one of the first data flow and the second data flow.

In some embodiments, the time information includes first sending time at which the data packet of the first data flow is sent or generated by the application server. The third network device obtains the first sending time from one or more data packets (for example, a GTP-U layer of the data packet) of the first data flow, and correspondingly determines third transmission time from sending of the data packet of the first data flow by the application server to receiving of the data packet of the first data flow by the third network device.

In some embodiments, the time information further includes second sending time at which the data packet of the second data flow is sent or generated by the application server. The third network device obtains the second sending time from one or more data packets (for example, a GTP-U layer of the data packet) of the second data flow, and correspondingly determines fourth transmission time from sending of the data packet of the second data flow by the application server to receiving of the data packet of the second data flow by the third network device.

In some embodiments, the configuration information includes an association identifier indicating that the first data flow is associated with the second data flow, and the association identifier may also indicate that the first data flow and the second data flow need to be synchronously transmitted. The third network device determines, based on the association identifier, a transmission time difference between the third transmission time and the fourth transmission time. In an implementation, the configuration information further includes the information about the clock difference between the first data flow and the second data flow, and the third network device further determines the transmission time difference based on the information about the clock difference.

In some embodiments, the third network device performs transmission scheduling on at least one of the first data flow and the second data flow based on the transmission time difference. Specifically, the third network device may configure a packet delay budget of at least one of the first data flow and the second data flow, so that the first data flow and the second data flow synchronously arrive at a terminal device. In some embodiments, the configuration information includes a plurality of quality of service configurations with different packet delay budgets, and the third network device selects a quality of service configuration from the plurality of quality of service configurations for at least one of the first data flow and the second data flow based on the transmission time difference.

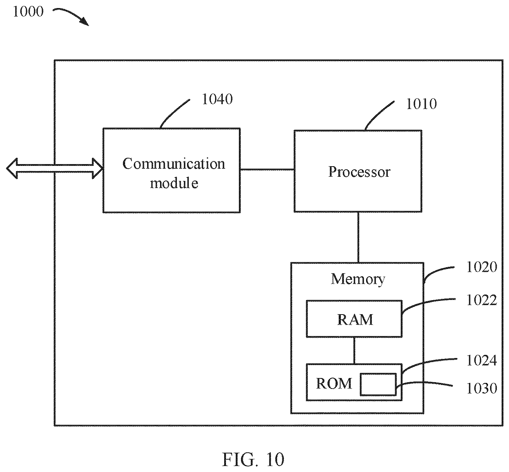

FIG. 10 is a block diagram of an example device 1000 that may be used to implement an embodiment of the present disclosure. The device 1000 may be implemented as or included in the first network device, the second network device, or the third network device described with reference to FIG. 1D to FIG. 9.

As shown in FIG. 10, the device 1000 includes one or more processors 1010, one or more memories 1020 coupled to the processor 1010, and a communication module 1040 coupled to the processor 1010.

The communication module 1040 may be configured for bidirectional communication. The communication module 1040 may have at least one communication interface for communication. The communication interface may include any interface necessary for communicating with another device.

The processor 1010 may be of any type suitable for a local technology network, and may include but is not limited to at least one of the following: one or more of a general-purpose computer, a dedicated computer, a microcontroller, a digital signal processor (Digital Signal Processor, DSP), or a controller-based multi-core controller architecture. The device 1000 may have a plurality of processors, such as an application-specific integrated circuit chip, which in terms of time, belongs to a clock synchronized with a main processor.

The memory 1020 may include one or more non-volatile memories and one or more volatile memories. An example of the non-volatile memory includes but is not limited to at least one of the following: a read-only memory (Read-Only Memory, ROM) 1024, an erasable programmable read-only memory (Erasable Programmable Read-Only Memory, EPROM), a flash memory, a hard disk, a compact disc (Compact Disc, CD), a digital versatile disc (Digital Versatile Disc, DVD), or other magnetic storage and/or optical storage. An example of the volatile memory includes but is not limited to at least one of the following: a random access memory (Random Access Memory, RAM) 1022, or another volatile memory that does not persist during power-off duration.

A computer program 1030 includes computer-executable instructions executed by the associated processor 1010. The program 1030 may be stored in the ROM 1024. The processor 1010 may perform any appropriate action and processing by loading the program 1030 into the RAM 1022.

Embodiments of the present disclosure may be implemented by using the program 1030, so that the device 1000 can perform any process discussed with reference to FIG. 2 to FIG. 9. Embodiments of the present disclosure may alternatively be implemented by hardware or a combination of software and hardware.

The program 1030 may be tangibly included in a computer-readable medium, and the computer-readable medium may be included in the device 1000 (for example, in the memory 1020) or another storage device that can be accessed by the device 1000. The program 1030 may be loaded from the computer-readable medium to the RAM 1022 for execution. The computer-readable medium may include any type of tangible non-volatile memory, for example, a ROM, an EPROM, a flash memory, a hard disk, a CD, a DVD, or the like.

In some embodiments, the communication module 1040 in the device 1000 may be implemented as a transmitter and a receiver (or a transceiver), and may be configured to send/receive, for example, a plurality of TCIs, at least one message, and capability information. In addition, the device 1000 may further include one or more of a scheduler, a controller, and a radio frequency/antenna. Details are not described in the present disclosure.

For example, the device 1000 in FIG. 10 may be implemented as an electronic device, or may be implemented as a chip or a chip system in the electronic device. This is not limited in embodiments of the present disclosure.

It should be noted that the foregoing embodiments are some implementations provided in this application, and are merely intended to describe the technical solutions of this application more clearly, but do not constitute a limitation on another embodiment of this application. In another embodiment, more or fewer procedures or steps, more or fewer components, more or fewer service functions, different scheduling policies, and the like may be further included. This is not limited herein. Persons of ordinary skill in the art may learn that with evolution of a network architecture and emergence of a new service scenario, the technical solutions provided in this application are also applicable to resolving a similar technical problem.

An embodiment of the present disclosure further provides a chip. The chip may include an input interface, an output interface, and a processing circuit. In embodiments of the present disclosure, the input interface and the output interface may complete signaling or data exchange, and the processing circuit may complete generation and processing of the signaling or the data information.

An embodiment of the present disclosure further provides a chip system, including a processor, configured to support a computing device to implement functions in any one of the foregoing embodiments. In a possible design, the chip system may further include a memory, configured to store necessary program instructions and data. When the processor runs the program instructions, a device in which the chip system is installed is enabled to implement the method in any one of the foregoing embodiments. For example, the chip system may include one or more chips, or may include a chip and another discrete device.

An embodiment of the present disclosure further provides a processor, configured to be coupled to a memory. The memory stores instructions. When the processor runs the instructions, the processor is enabled to perform the method and the function in any one of the foregoing embodiments.

An embodiment of the present disclosure further provides a computer program or a computer program product including instructions. When the computer program or the computer program product is run on a computer, the computer is enabled to perform the method and the function in any one of the foregoing embodiments.

An embodiment of the present disclosure further provides a computer-readable storage medium. The computer-readable storage medium stores computer instructions. When a processor runs the instructions, the processor is enabled to perform the method and the function in any one of the foregoing embodiments.

Usually, various embodiments of this application may be implemented by hardware or a dedicated circuit, software, logic, or any combination thereof. Some aspects may be implemented by hardware, and other aspects may be implemented by firmware or software, and may be executed by a controller, a microprocessor, or another computing device. Although various aspects of embodiments of the present disclosure are shown and described as block diagrams, flowcharts, or some other figures, it should be understood that the blocks, devices, systems, techniques, or methods described in this specification may be implemented as, for example, non-limiting examples, hardware, software, firmware, dedicated circuits or logic, general-purpose hardware, controllers, other computing devices, or a combination thereof.

The present disclosure further provides at least one computer program product tangibly stored in a non-transitory computer-readable storage medium. The computer program product includes computer-executable instructions, for example, instructions included in a program module, which are executed in a device on a real or virtual target processor, to perform the process/method as described above with reference to the accompanying drawings. Usually, the program module includes a routine, a program, a library, an object, a class, a component, a data structure, or the like that executes a specific task or implements a specific abstract data type. In various embodiments, functions of the program modules may be combined or split between the program modules as required. Machine-executable instructions for the program module may be executed locally or in a distributed device. In the distributed device, the program module may be located in both local and remote storage media.

Computer program code used for implementing the method in the present disclosure may be written in one or more programming languages. The computer program code may be provided for a processor of a general-purpose computer, a dedicated computer, or another programmable data processing device, so that when the program code is executed by the computer or the another programmable data processing device, functions/operations specified in the flowcharts and/or block diagrams are implemented. The program code may be executed entirely on a computer, partly on a computer, as a standalone software package, partly on a computer and partly on a remote computer, or entirely on a remote computer or a server.

In the context of the present disclosure, the computer program code or related data may be carried in any proper carrier, so that the device, the apparatus, or the processor can perform various processing and operations described above. Examples of the carrier include a signal, a computer-readable medium, and the like. Examples of the signal may include an electrical signal, an optical signal, a radio signal, a voice signal, or other forms of propagated signals, such as a carrier wave and an infrared signal.

The computer-readable medium may be any tangible medium that includes or stores programs used for or related to an instruction execution system, device, or apparatus. The computer-readable medium may be a computer-readable signal medium or a computer-readable storage medium. The computer-readable medium may include but is not limited to an electronic, magnetic, optical, electromagnetic, infrared, or semiconductor system, device, or apparatus, or any suitable combination thereof. More detailed examples of the computer-readable storage medium include an electrical connection with one or more wires, a portable computer disk, a hard disk, a random access memory (RAM), a read-only memory (ROM), an erasable programmable read-only memory (EPROM or a flash memory), an optical storage device, a magnetic storage device, or any suitable combination thereof.

In addition, although the operations of the method in the present disclosure are described in a particular order in the accompanying drawings, this does not require or imply that these operations need to be performed in the particular order, or that all the operations shown need to be performed to achieve the desired results. Instead, execution orders of the steps depicted in the flowcharts may change. Additionally or alternatively, some steps may be omitted, a plurality of steps may be combined into one step for execution, and/or one step may be broken down into a plurality of steps for execution. It should further be noted that, the features and functions of two or more devices according to the present disclosure may be specific in one device. Instead, features and functions of one device described above may be further specific in a plurality of devices.

Various implementations of the present disclosure have been described above. The foregoing descriptions are examples, are not exhaustive, and are not limited to the disclosed implementations. Many modifications and changes are apparent to persons of ordinary skill in the art without departing from the scope and spirit of the described implementations. Selection of the terms used in this specification is intended to well explain principles of the implementations, actual applications, or improvements to technologies in the market, or to enable other persons of ordinary skill in the art to understand the implementations disclosed in this specification.

In the foregoing specific implementations, the objectives, the technical solutions, and the benefits of embodiments of this application are further described in detail. It should be understood that the foregoing descriptions are merely specific implementations of embodiments of this application, but are not intended to limit the protection scope of embodiments of this application. Any modification, equivalent replacement, or improvement made based on the technical solutions of embodiments of this application shall fall within the protection scope of embodiments of this application.

It should be noted that although the foregoing describes embodiments of this application with reference to the accompanying drawings, the foregoing embodiments are not independent of each other, and may also be combined to obtain another embodiment. Division of manners, cases, categories, and embodiments in embodiments of this application is merely for ease of description, and shall not constitute a special limitation. Various manners, categories, cases, and features in embodiments may be combined with each other provided that they comply with logic. The implementations of this application may be randomly combined, to achieve different technical effect. Various combinations are not listed in embodiments of this application.

## Claims

1. A communication method, comprising:
receiving, by a first network device, configuration information, wherein the configuration information is used to enable the first network device to report time information used for synchronous transmission of a first data flow of a service and a second data flow of the service;
determining first transmission time from sending of the first service flow by an application server to arrival of the first service flow at the first network device; and
reporting, based on the first transmission time, the time information used for synchronous transmission of the first data flow and the second data flow.

2. The method according to claim 1, wherein determining the first transmission time comprises:
determining first arrival time at which a data packet of the first data flow arrives at the first network device and a first timestamp in the data packet; and
determining the first transmission time based on the first arrival time and the first timestamp.

3. The method according to claim 1, wherein reporting the time information comprises:
sending the first transmission time to a second network device; or
sending the first transmission time to a third network device.

4. The method according to any one of claims 1 to 3, further comprising:
determining second arrival time at which a data packet of the second data flow arrives at the first network device and a second timestamp in the data packet; and
determining, based on the second arrival time and the second timestamp, second transmission time from sending of the second data flow by the application server or another application server to arrival of the second data flow at the first network device.

5. The method according to claim 4, wherein reporting the time information further comprises:
sending the second transmission time to the second network device; or
sending the second transmission time to the third network device.

6. The method according to any one of claims 1 to 4, wherein the configuration information comprises an association identifier indicating that the first data flow is associated with the second data flow.

7. The method according to claim 6, further comprising:
determining a transmission time difference between the first transmission time and the second transmission time based on the association identifier.

8. The method according to claim 7, wherein reporting the time information comprises:
sending the transmission time difference to the second network device; or
sending the transmission time difference to the third network device.

9. The method according to any one of claims 1 to 7, wherein the configuration information further comprises information about a clock difference between the first data flow and the second data flow, and the transmission time difference is further determined based on the information about the clock difference.

10. The method according to claim 8, wherein the configuration information further comprises a trigger condition, and the trigger condition indicates a threshold for the first network device to send the transmission time difference, or indicates the first network device to periodically send the transmission time difference.

11. The method according to claim 5, wherein
sending the first transmission time to the third network device comprises: adding the first transmission time to the data packet of the first data flow; and/or
sending the second transmission time to the third network device comprises: adding the second transmission time to the data packet of the second data flow.

12. The method according to claim 8, wherein sending the transmission time difference to the third network device comprises:
adding the transmission time difference to a data packet of at least one of the first data flow and the second data flow.

13. A communication method, comprising:
receiving, by a second network device, time information used for synchronous transmission of a first data flow of a service and a second data flow of the service; and
performing transmission scheduling on at least one of the first data flow and the second data flow based on the time information.

14. The method according to claim 13, further comprising:
receiving, by the second network device, data flow synchronization information from an application function device, wherein the data flow synchronization information comprises at least one of the following:
description information of the first data flow and the second data flow;
an association identifier, indicating that the first data flow is associated with the second data flow; and/or
a synchronization indication, indicating to perform synchronous transmission scheduling on the first data flow and the second data flow.

15. The method according to claim 14, further comprising:
generating, based on the data flow synchronization information, a data flow policy indicating to report the time information.

16. The method according to claim 15, wherein the time information comprises:
first transmission time from sending of the first data flow by an application server to arrival of the first data flow at a first network device; and/or
second transmission time from sending of the second data flow by the application server or another application server to arrival of the second data flow at the first network device or another first network device.

17. The method according to claim 16, further comprising:
determining a transmission time difference between the first transmission time and the second transmission time.

18. The method according to claim 17, wherein the data flow synchronization information further comprises information about a clock difference between the first data flow and the second data flow, and the transmission time difference is further determined based on the information about the clock difference.

19. The method according to claim 15, wherein the data flow monitoring policy comprises information about a clock difference between the first data flow and the second data flow.

20. The method according to claim 15, wherein the time information comprises:
a transmission time difference between first transmission time of the first data flow and second transmission time of the second data flow.

21. The method according to claim 20, wherein the data flow monitoring policy comprises a trigger condition, and the trigger condition indicates a threshold for reporting the transmission time difference, or to periodically report the transmission time difference.

22. The method according to claim 13, wherein performing transmission scheduling comprises:
configuring a packet delay budget of at least one of the first data flow and the second data flow based on the time information.

23. The method according to claim 14, further comprising:
generating a plurality of quality of service configurations with different packet delay budgets based on the data flow synchronization information.

24. A communication method, comprising:
obtaining, by a third network device from a data packet of at least one of a first data flow of a service and a second data flow of the service, time information used for synchronous transmission of the first data flow and the second data flow; and
performing transmission scheduling on at least one of the first data flow and the second data flow based on the time information.

25. The method according to claim 24, further comprising:
receiving configuration information indicating the third network device to perform transmission scheduling.

26. The method according to claim 25, wherein the configuration information comprises an association identifier indicating that the first data flow is associated with the second data flow.

27. The method according to claim 26, wherein obtaining the time information comprises:
obtaining, from a data packet of the first data flow, first transmission time from sending of the first data flow by an application server to arrival of the first data flow at a first network device; and/or
obtaining, from a data packet of the second data flow, second transmission time from sending of the second data flow by the application server or another application server to arrival of the second data flow at the first network device or another first network device.

28. The method according to claim 27, wherein obtaining the time information further comprises:
determining a transmission time difference between the first transmission time and the second transmission time.

29. The method according to claim 28, wherein the configuration information further comprises information about a clock difference between the first data flow and the second data flow, and the transmission time difference is further determined based on the information about the clock difference.

30. The method according to claim 25, wherein obtaining the time information comprises:
obtaining, from the data packet of at least one of the first data flow and the second data flow, a transmission time difference between first transmission time of the first data flow and second transmission time of the second data flow.

31. The method according to claim 28 or 30, wherein performing transmission scheduling comprises:
configuring a packet delay budget of at least one of the first data flow and the second data flow based on the transmission time difference, so that the first data flow and the second data flow synchronously arrive at a terminal device.

32. The method according to claim 28 or 30, wherein the configuration information comprises a plurality of quality of service configurations with different packet delay budgets, and performing transmission scheduling comprises:
selecting a quality of service configuration from the plurality of quality of service configurations for at least one of the first data flow and the second data flow based on the transmission time difference.

33. A network device, comprising:
a processor; and
a memory, wherein the memory stores instructions; and when the instructions are executed by the processor, the network device is enabled to perform the method according to any one of claims 1 to 32.

34. A chip, wherein the chip comprises a processing circuit, and the processing circuit is configured to perform the method according to any one of claims 1 to 32.

35. A computer-readable storage medium, wherein the computer-readable storage medium stores instructions; and when the instructions are executed by a device, the device is enabled to perform the method according to any one of claims 1 to 32.

36. A computer program product, wherein the computer program product comprises instructions; and when the instructions are executed by a device, the device is enabled to perform the method according to any one of claims 1 to 32.
